(19) **Europäisches Patentamt**
**European Patent Office**
**Office européen des brevets**

(11) **EP 4 300 517 A1**

(12) # EUROPEAN PATENT APPLICATION
published in accordance with Art. 153(4) EPC

(43) Date of publication:
**03.01.2024 Bulletin 2024/01**

(21) Application number: **22807317.7**

(22) Date of filing: **19.04.2022**

(51) International Patent Classification (IPC):
*H01B 1/10* [(2006.01)]  *C01B 21/00* [(2006.01)]
*C01B 25/14* [(2006.01)]  *H01B 1/06* [(2006.01)]
*H01B 13/00* [(2006.01)]  *H01M 10/052* [(2010.01)]
*H01M 10/0562* [(2010.01)]

(52) Cooperative Patent Classification (CPC):
**C01B 21/00; C01B 25/14; H01B 1/06; H01B 1/10;
H01B 13/00; H01M 10/052; H01M 10/0562;
Y02E 60/10**

(86) International application number:
**PCT/JP2022/018190**

(87) International publication number:
**WO 2022/239614 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.05.2021 JP 2021080645**

(71) Applicant: **GS Yuasa International Ltd.
Kisshoin, Minami-ku,
Kyoto-shi, Kyoto 601-8520 (JP)**

(72) Inventors:
• **FUKUSHIMA Akihiro
Kyoto-shi, Kyoto 601-8520 (JP)**
• **NISHII Katsuya
Kyoto-shi, Kyoto 601-8520 (JP)**

(74) Representative: **Isarpatent
Patent- und Rechtsanwälte
Barth Hassa Peckmann & Partner mbB
Friedrichstraße 31
80801 München (DE)**

(54) **SULFIDE SOLID ELECTROLYTE, METHOD FOR PRODUCING SULFIDE SOLID
ELECTROLYTE, POWER STORAGE ELEMENT, ELECTRONIC DEVICE, AND AUTOMOBILE**

(57)    A sulfide solid electrolyte according to an aspect of the present invention includes a crystal structure and contains, as constituent elements, one, or two or more divalent elements A, one, or two or more halogen elements X, and a nitrogen element, and the divalent element A and the halogen element X make a combination such that a compound $A_{0.5}X$ composed of the divalent element A and the halogen element X is higher in hydration energy than LiI.

Fig. 3

**Description**

TECHNICAL FIELD

The present invention relates to a sulfide solid electrolyte, a method for producing a sulfide solid electrolyte, an energy storage device, an electronic device, and an automobile.

BACKGROUND ART

Lithium ion secondary batteries have been, because their high energy densities, heavily used for electronic devices such as personal computers and communication terminals, automobiles, and the like. The nonaqueous electrolyte secondary batteries each include a pair of electrodes electrically isolated by a separator, and a nonaqueous electrolyte interposed between the electrodes, and is configured to allow lithium ions to be transferred between the two electrodes for charge-discharge. In addition, capacitors such as lithium ion capacitors have been also widely used as energy storage devices other than the lithium ion secondary batteries.

In recent years, an energy storage device has been proposed in which a solid electrolyte such as a sulfide solid electrolyte is used as a nonaqueous electrolyte in place of a nonaqueous electrolyte solution in which an electrolyte salt is dissolved in a liquid such as an organic solvent. As one of sulfide solid electrolytes, Patent Document 1 describes a sulfide solid electrolyte containing Li, A (A is at least one of P, Si, Ge, Al, and B), X (X is a halogen), and S, which is a glass ceramic, characterized by having peaks at $2\theta = 20.2°$ and $23.6°$ in X-ray diffraction measurement with a CuKa ray used. In Patent Document 1, specifically, a sulfide solid electrolyte that has a composition represented by $xLiI \cdot (100 - x)(0.75Li_2S \cdot 0.25P_2S_5)$ is synthesized, and the ionic conductivity and the like are evaluated.

PRIOR ART DOCUMENT

PATENT DOCUMENT

Patent Document 1: JP-A-2013-016423

SUMMARY OF THE INVENTION

PROBLEMS TO BE SOLVED BY THE INVENTION

The sulfide solid electrolyte has low water resistance, and has the disadvantage of reacting with water in the atmosphere. For this reason, even when the sulfide solid electrolyte is left in a dry air atmosphere that has only a small amount of moisture, the sulfide solid electrolyte reacts with the moisture contained in a minute amount in the dry air, thereby decreasing the ionic conductivity. The ionic conductivity of the sulfide solid electrolyte, which is once decreased with the electrolyte left in the air atmosphere, is not sufficiently recovered to the state before being left in the air atmosphere, even when the sulfide solid electrolyte is dried again.

The present invention has been made based on the foregoing circumstances, and an object of the present invention is to provide a sulfide solid electrolyte that is high in recovery rate of ionic conductivity by drying again when the ionic conductivity is decreased with the electrolyte left in an air atmosphere, a method for producing such a sulfide solid electrolyte, and an energy storage device with such a sulfide solid electrolyte used.

MEANS FOR SOLVING THE PROBLEMS

A sulfide solid electrolyte according to an aspect of the present invention includes a crystal structure and contains, as constituent elements, one, or two or more divalent elements A, one, or two or more halogen elements X, and a nitrogen element, and the divalent element A and the halogen element X make a combination such that a compound $A_{0.5}X$ composed of the divalent element A and the halogen element X is higher in hydration energy than LiI.

A method for producing a sulfide solid electrolyte according to another aspect of the present invention includes treating a composition material containing, as constituent elements, one, or two or more divalent elements A, one, or two or more halogen elements X, and a nitrogen element, and the divalent element A and the halogen element X make a combination such that a compound $A_{0.5}X$ composed of the divalent element A and the halogen element X is higher in hydration energy than LiI.

An energy storage device according to another aspect of the present invention is an energy storage device containing the sulfide solid electrolyte according to an aspect of the present invention.

An electronic device according to another aspect of the present invention is an electronic device including the energy storage device according to an aspect of the present invention.

An automobile according to another aspect of the present invention is an automobile including the energy storage device according to an aspect of the present invention.

ADVANTAGES OF THE INVENTION

According to any one of the aspects of the present invention is to provide a sulfide solid electrolyte that is high in recovery rate of ionic conductivity by drying again when the ionic conductivity is decreased with the electrolyte left in an air atmosphere, a method for producing such a sulfide solid electrolyte, an energy storage device with such a sulfide solid electrolyte used, an electronic device with such an energy storage device used, and an automobile with such an energy storage device used.

BRIEF DESCRIPTION OF THE DRAWINGS

Fig. 1 is a schematic cross-sectional view of an all-solid-state battery as an embodiment of an energy storage device of the present invention.
Fig. 2 is a schematic view illustrating an energy storage apparatus composed of a plurality of assembled energy storage devices according to an embodiment of the present invention.
Fig. 3 shows X-ray diffraction diagrams of respective sulfide solid electrolytes according to Examples 2 to 5 and Comparative Example 1.
Fig. 4 shows X-ray diffraction diagrams of respective sulfide solid electrolytes according to Examples 3 and 12 to 18.

MODE FOR CARRYING OUT THE INVENTION

An embodiment of the present invention provides the following aspects.

Item 1.

A sulfide solid electrolyte including a crystal structure, and

containing, as constituent elements, one, or two or more divalent elements A, one, or two or more halogen elements X, and a nitrogen element,
where the divalent element A and the halogen element X make a combination such that a compound $A_{0.5}X$ composed of the divalent element A and the halogen element X is higher in hydration energy than LiI.

Item 2.

The sulfide solid electrolyte according to item 1, where the divalent element A and the halogen element X make a combination such that the compound $A_{0.5}X$ composed of the divalent element A and the halogen element X has hydration energy of -4 meV/atom or more.

Item 3.

The sulfide solid electrolyte according to item 2, where the divalent element A and the halogen element X make a combination such that the compound $A_{0.5}X$ composed of the divalent element A and the halogen element X has hydration energy of 0 meV/atom or more.

Item 4.

The sulfide solid electrolyte according to item 3, where the divalent element A and the halogen element X make a combination such that the compound $A_{0.5}X$ composed of the divalent element A and the halogen element X has hydration energy of 2 meV/atom or more.

Item 5.

The sulfide solid electrolyte according to item 4, where the divalent element A and the halogen element X make a combination such that the compound $A_{0.5}X$ composed of the divalent element A and the halogen element X has hydration energy of 4 meV/atom or more.

Item 6.

The sulfide solid electrolyte according to any one of items 1 to 5, where the divalent element A and the halogen element X make a combination such that the compound $A_{0.5}X$ composed of the divalent element A and the halogen element X has hydration energy of 200 meV/atom or less.

Item 7.

The sulfide solid electrolyte according to any one of items 1 to 6, where the sulfide solid electrolyte satisfies any of the following a to c:

a: the divalent element A is one, or two or more elements selected from the group consisting of calcium, strontium, barium, manganese, and zinc, and the halogen element X is one, or two or more elements selected from the group consisting of fluorine, chlorine, bromine, and iodine;
b: the divalent element A is magnesium, and the halogen element X is fluorine; and
c: the divalent element A is copper, and the halogen element X is one, or two or more elements selected from the group consisting of chlorine, bromine, and iodine.

Item 8.

The sulfide solid electrolyte according to item 7, where the sulfide solid electrolyte satisfies either the following a1 or a2:

a1: the divalent element A is one, or two or more elements selected from the group consisting of calcium, barium, manganese, and zinc, and the halogen element X is one, or two or more elements selected from the group consisting of fluorine, chlorine, bromine, and iodine; and
a2: the divalent element A is strontium, and the halogen element X is one, or two or more elements selected from the group consisting of fluorine, chlorine, and bromine.

Item 9.

The sulfide solid electrolyte according to any one of items 1 to 8, where the halogen element X contains iodine.

Item 10.

The sulfide solid electrolyte according to any one of items 1 to 9, where the divalent element A is zinc.

Item 11.

The sulfide solid electrolyte according to any one of items 1 to 10, further containing a phosphorus element as a constituent element, where the molar ratio of the content of the divalent element A to the content of the phosphorus element is 0.01 or more and 0.4 or less.

Item 12.

The sulfide solid electrolyte according to any one of items 1 to 11, further containing a phosphorus element and a lithium element as constituent elements, where the molar ratio of the content of the lithium element to the content of the phosphorus element is 1 or more and 5 or less.

Item 13.

The sulfide solid electrolyte according to any one of items 1 to 12, further containing a phosphorus element and a sulfur element as constituent elements, where the molar ratio of the content of the sulfur element to the content of the phosphorus element is 2 or more and 6 or less.

Item 14.

The sulfide solid electrolyte according to any one of items 1 to 13, further containing a phosphorus element as a constituent element, where the molar ratio of the content of the halogen element X to the content of the phosphorus element is 0.1 or more and 2 or less.

Item 15.

The sulfide solid electrolyte according to any one of items 1 to 14, having an ionic conductivity of 1 mS/cm or more at 25°C.

Item 16.

The sulfide solid electrolyte according to any one of items 1 to 15, having diffraction peaks in the range of 19.9° ± 0.5° and the range of 29.3° ± 0.5° in an X-ray diffraction diagram with a CuKa ray used.

Item 17.

The sulfide solid electrolyte according to item 16, where the diffraction peak in the range of 19.9° ± 0.5° is, in an X-ray diffraction diagram with a CuKa ray used, a diffraction peak with the highest diffraction intensity, a diffraction peak with the second highest diffraction intensity, a diffraction peak with the third highest diffraction intensity, or a diffraction peak with the fourth highest diffraction intensity.

Item 18.

The sulfide solid electrolyte according to any one of items 1 to 17, further containing an element M as a constituent element, where the element M is an element other than the divalent element A, and is at least one selected from the group consisting of aluminum, tantalum, silicon, scandium, magnesium, niobium, boron, hafnium, carbon, zirconium, and titanium.

Item 19.

The sulfide solid electrolyte according to any one of items 1 to 18, represented by the following formula 1:
[Chemical Formula 1]

$$(100\text{-}u\text{-}v\text{-}v')\{(1\text{-}z)[xLi_2S \cdot yP_2S_5] \cdot zLi_\alpha M_\beta N\} \cdot uA_{0.5}X \cdot vLiI \cdot v'LiX' \cdot wY \cdots \qquad 1$$

In the formula 1, A is the divalent element A mentioned above, X is the halogen element X mentioned above, X' is a halogen element other than I, M is an element other than the divalent element A, and is at least one element selected from the group consisting of Al, Ta, Si, Sc, Mg, Nb, B, Hf, C, Zr, and Ti, $\alpha$ and $\beta$ are numbers that give a stoichiometric ratio depending on the type of the element M, Y is one, or two or more elements other than Li, S, P, N, I, A, M, X, and X', x is a number of 0.5 or more and 0.8 or less, y is a number of 0.2 or more and 0.5 or less, z is a number of more than 0 and 0.5 or less, u is a number of more than 0 and 30 or less, v is a number of 0 or more and 30 or less, v' is a number of 0 or more and 30 or less, and w is a number of 0 or more and 20 or less.

Item 20.

The sulfide solid electrolyte according to any one of items 1 to 19, further containing, as constituent elements, one, or two or more divalent elements B other than the divalent element A, where the molar ratio of the content of the divalent element B to the total content of the divalent element A and the divalent element B is less than 0.5.

Item 21.

The sulfide solid electrolyte according to any one of items 1 to 19, containing, as a constituent element, substantially no divalent element B other than the divalent element A.

Item 22.

A method for producing a sulfide solid electrolyte, including treating a composition material containing, as constituent elements, one, or two or more divalent elements A, one, or two or more halogen elements X, and a nitrogen element, where the divalent element A and the halogen element X make a combination such that a compound $A_{0.5}X$ composed of the divalent element A and the halogen element X is higher in hydration energy than LiI.

Item 23.

An energy storage device containing the sulfide solid electrolyte according to any one of items 1 to 21.

Item 24.

An electronic device including the energy storage device according to item 23.

Item 25.

An automobile including the energy storage device according to item 23.

First, outlines of a sulfide solid electrolyte, a method for producing a sulfide solid electrolyte, an energy storage device, an electronic device, and an automobile, which are disclosed in the present specification, will be described.

A sulfide solid electrolyte according to an aspect of the present invention includes a crystal structure and contains, as constituent elements, one, or two or more divalent elements A, one, or two or more halogen elements X, and a nitrogen element, and the divalent element A and the halogen element X make a combination such that a compound $A_{0.5}X$ composed of the divalent element A and the halogen element X is higher in hydration energy than LiI.

The sulfide solid electrolyte is high in recovery rate of ionic conductivity by drying again, when the ionic conductivity is decreased with the electrolyte left in an air atmosphere. Hereinafter, when the ionic conductivity is decreased with the sulfide solid electrolyte left in an air atmosphere, the recovery rate of the ionic conductivity by drying again is referred to simply as a "recovery rate". Although the reason why such an effect mentioned above is produced is not clear, the following reason is presumed. The low recovery rate of a solid electrolyte such as a conventional $Li_2S$-$P_2S_5$-LiI-based solid electrolyte is believed to be influenced by the easiness of hydration in a part derived from or related to LiI, and the like. More specifically, when the electrolyte is left in an air atmosphere, a poorly reversible hydration reaction is believed to be developed, thereby insufficiently extracting the hydrated water even when the electrolyte is dried again, and insufficiently recovering the ionic conductivity. In contrast, the sulfide solid electrolyte contains the divalent element A and the halogen element X that make a combination such that the compound $A_{0.5}X$ is higher in hydration energy than LiI. For this reason, in the sulfide solid electrolyte, the reversibility of the hydration reaction is presumed to be improved, thereby achieving a high recovery rate. In addition, the sulfide solid electrolyte further contains a nitrogen element, thereby allowing a high recovery rate to be achieved. As the reasons therefor, for example, the nitrogen element itself is presumed to have the effect of suppressing the poorly reversible hydration reaction, and the coexistence of the divalent element A, the halogen element X, and the nitrogen element is presumed to further improve the reversibility of the hydration reaction described above. It is to be noted that the sulfide solid electrolyte is not to be considered limited to any sulfide solid electrolyte with the compound $A_{0.5}X$ used as a raw material.

It is to be noted that having the crystal structure can be confirmed by powder X-ray diffraction measurement. More specifically, "having the crystal structure" means that a peak derived from the crystal structure of the solid electrolyte is observed in an X-ray diffraction diagram in powder X-ray diffraction measurement. The sulfide solid electrolyte may include an amorphous part. The powder X-ray diffraction measurement is performed by the following procedure. An airtight sample holder for X-ray diffraction measurement is filled with a sulfide solid electrolyte powder to be measured in an argon atmosphere with a dew point of -50°C or lower. The powder X-ray diffraction measurement is performed by using an X-ray diffractometer ("MiniFlex II" from Rigaku Corporation). With a CuKa ray used as a radiation source, and at a tube voltage of 30 kV and a tube current of 15 mA, the diffracted X-ray is allowed to pass through a Kβ filter of 30 μm in thickness, and detected by a high-speed one-dimensional detector (model number: D/teX Ultra 2). The sampling width, scanning speed, divergence slit width, light receiving slit width, and scattering slit width are set to be respectively 0.01°, 5°/min, 0.625°, 13 mm (OPEN), and 8 mm.

The term "divalent element" refers to an element that can become a divalent cation. The divalent element may be any element capable of serving as an ion with any other valence as long as the element can serve as a divalent cation.

The "hydration energy" of each of the compounds $A_{0.5}X$ and LiI is a value determined by the first-principles calculation described later.

In the sulfide solid electrolyte, the divalent element A and the halogen element X preferably make a combination such that the compound $A_{0.5}X$ composed of the divalent element A and the halogen element X has hydration energy of

-4 meV/atom or more.

In the sulfide solid electrolyte, the divalent element A and the halogen element X preferably make a combination such that the compound $A_{0.5}X$ composed of the divalent element A and the halogen element X has hydration energy of 0 meV/atom or more.

In the sulfide solid electrolyte, the divalent element A and the halogen element X preferably make a combination such that the compound $A_{0.5}X$ composed of the divalent element A and the halogen element X has hydration energy of 2 meV/atom or more.

In the sulfide solid electrolyte, the divalent element A and the halogen element X preferably make a combination such that the compound $A_{0.5}X$ composed of the divalent element A and the halogen element X has hydration energy of 4 meV/atom or more.

In the sulfide solid electrolyte, the divalent element A and the halogen element X may make a combination such that the compound $A_{0.5}X$ composed of the divalent element A and the halogen element X has hydration energy of 200 meV/atom or less.

The sulfide solid electrolyte preferably satisfies any of the following a to c.

a: the divalent element A is one, or two or more elements selected from the group consisting of calcium, strontium, barium, manganese, and zinc, and the halogen element X is one, or two or more elements selected from the group consisting of fluorine, chlorine, bromine, and iodine;
b: the divalent element A is magnesium, and the halogen element X is fluorine; and
c: the divalent element A is copper, and the halogen element X is one, or two or more elements selected from the group consisting of chlorine, bromine, and iodine.

The a to c mentioned above are each a combination of the divalent element A and the halogen element X, in which the compound $A_{0.5}X$ is higher than LiI in hydration energy determined by the first-principles calculation described later. Accordingly, when the divalent element A and the halogen element X make the combination such that the sulfide solid electrolyte satisfies any one of the a to c mentioned above, the recovery rate of the sulfide solid electrolyte becomes more favorable.

The sulfide solid electrolyte preferably satisfies either the following a1 or a2.

a1: the divalent element A is one, or two or more elements selected from the group consisting of calcium, barium, manganese, and zinc, and the halogen element X is one, or two or more elements selected from the group consisting of fluorine, chlorine, bromine, and iodine; and
a2: the divalent element A is strontium, and the halogen element X is one, or two or more elements selected from the group consisting of fluorine, chlorine, and bromine.

The a1 and a2 mentioned above are each a combination of the divalent element A and the halogen element X such that the compound $A_{0.5}X$ has hydration energy of 0 meV/atom or more determined by the first-principles calculation (see Table 3). Accordingly, when the divalent element A and the halogen element X make the combination such that the sulfide solid electrolyte satisfies any of the a1 and a2 mentioned above, the recovery rate of the sulfide solid electrolyte become more preferable.

In the sulfide solid electrolyte, the halogen element X preferably contains iodine. In the sulfide solid electrolyte, the halogen element X contains iodine, thereby making a crystal structure with a high ionic conductivity likely to be deposited.

In the sulfide solid electrolyte, the divalent element A is preferably zinc. In such a case, in addition to the recovery rate, the ionic conductivity before being left in an air atmosphere is also increased.

Preferably, the sulfide solid electrolyte further contains a phosphorus element as a constituent element, and the molar ratio of the content of the divalent element A to the content of the phosphorus element is 0.01 or more and 0.4 or less.

Preferably, the sulfide solid electrolyte further contains a phosphorus element and a lithium element as constituent elements, and the molar ratio of the content of the lithium element to the content of the phosphorus element is 1 or more and 5 or less.

Preferably, the sulfide solid electrolyte further contains a phosphorus element and a sulfur element as constituent elements, and the molar ratio of the content of the sulfur element to the content of the phosphorus element is 2 or more and 6 or less.

Preferably, the sulfide solid electrolyte further contains a phosphorus element as a constituent element, and the molar ratio of the content of the halogen element X to the content of the phosphorus element is 0.1 or more and 2 or less.

The sulfide solid electrolyte preferably has an ionic conductivity of 1 mS/cm or more at 25°C.

The sulfide solid electrolyte preferably has diffraction peaks in the range of 19.9° ± 0.5° and the range of 29.3° ± 0.5° in an X-ray diffraction diagram with a CuKa ray used. The specific crystal structure with the diffraction peaks in the range of 19.9° ± 0.5° and the range of 29.3° ± 0.5° in an X-ray diffraction diagram with a CuKa ray used is known to be a phase with high an ionic conductivity (HICP: High Ion Conduction Phase). Accordingly, when the diffraction peaks appear in the ranges mentioned above, the sulfide solid electrolyte can be considered to have an HICP formed, and is capable of achieving a favorable ionic conductivity. It is to be noted that "the X-ray diffraction diagram with the CuKa ray used" is obtained by the powder X-ray diffraction measurement mentioned above.

In the sulfide solid electrolyte, any one of a diffraction peak with the highest diffraction intensity, a diffraction peak with the second highest diffraction intensity, a diffraction peak with the third highest diffraction intensity, and a diffraction peak with the fourth highest diffraction intensity is preferably located in the range of 19.9° ± 0.5° in an X-ray diffraction diagram with a CuKa ray used. As mentioned above, the diffraction peak in the range of 19.9° ± 0.5° is derived from an HICP. Accordingly, in such a case, the sulfide solid electrolyte can be considered to have an HICP sufficiently formed, and is capable of achieving a higher ionic conductivity.

Preferably, the sulfide solid electrolyte further contains an element M as a constituent element, and the element M is an element other than the divalent element A, and is at least one selected from the group consisting of aluminum, tantalum, silicon, scandium, magnesium, niobium, boron, hafnium, carbon, zirconium, and titanium. In such a case, in the process of producing the sulfide solid electrolyte, the discharge of the nitrogen element, which is an element that has the effect of suppressing the poorly reversible hydration reaction, to the outside of the system is suppressed, thus further keeping the ionic conductivity from being decreased when the sulfide solid electrolyte is left in an air atmosphere, and further increasing the recovery rate. Although the reason therefor is not clear, the following reason is presumed. In the method for producing a sulfide solid electrolyte with the use of $Li_3N$ as a raw material compound for containing a nitrogen element, the low defect generation energy for the nitrogen of $Li_3N$ makes a nitrogen gas more likely to be generated. In contrast, when a raw material compound containing a nitrogen element and the element M is used, the high defect generation energy for nitrogen makes a nitrogen defect less likely to be generated in a synthesis process, thus making a nitrogen gas less likely to be generated. For this reason, the nitrogen element can be kept form being discharged to the outside of the system in the production process. It is to be noted that the element M is an element that has defect generation energy of 4.00 eV or more for nitrogen, calculated by the first-principles calculation described later, in a compound represented by $L_\alpha M_\beta N$ (L is at least one element selected from the group consisting of lithium, sodium, and potassium, M is the element M mentioned above, and $\alpha$ and $\beta$ are numerical values that give a stoichiometric ratio depending on to the type of the element M). The definition of the defect generation energy for nitrogen, and the like will be described later.

The sulfide solid electrolyte is preferably represented by the following formula 1.

[Chemical Formula 2]

$$(100-u-v-v')\{(1-z)[xLi_2S \cdot yP_2S_5] \cdot zLi_\alpha M_\beta N\} \cdot uA_{0.5}X \cdot vLiI \cdot v'LiX' \cdot wY \cdots \qquad 1$$

In the formula 1, A is the divalent element A mentioned above, X is the halogen element X mentioned above, X' is a halogen element other than I, M is an element other than the divalent element A, and is at least one element selected from the group consisting of Al, Ta, Si, Sc, Mg, Nb, B, Hf, C, Zr, and Ti, $\alpha$ and $\beta$ are numbers that give a stoichiometric ratio depending on the type of the element M, Y is one, or two or more elements other than Li, S, P, N, I, A, M, X, and X', x is a number of 0.5 or more and 0.8 or less, y is a number of 0.2 or more and 0.5 or less, z is a number of more than 0 and 0.5 or less, u is a number of more than 0 and 30 or less, v is a number of 0 or more and 30 or less, v' is a number of 0 or more and 30 or less, and w is a number of 0 or more and 20 or less.

When the sulfide solid electrolyte has such a composition, the recovery rate is further increased.

Preferably, the sulfide solid electrolyte further contains, as constituent elements, one, or two or more divalent elements B other than the divalent element A, and the molar ratio of the content of the divalent elements B to the total content of the divalent element A and the divalent elements B is less than 0.5.

The sulfide solid electrolyte preferably contains, as a constituent element, substantially no divalent element B other than the divalent element A.

A method for producing a sulfide solid electrolyte according to another aspect of the present invention includes treating a composition material containing, as constituent elements, one, or two or more divalent elements A, one, or two or more halogen elements X, and a nitrogen element, and the divalent element A and the halogen element X make a combination such that a compound $A_{0.5}X$ composed of the divalent element A and the halogen element X is higher in hydration energy than LiI.

The production method is capable of producing a sulfide solid electrolyte that is high in recovery rate.

It is to be noted that the term "composition material" means a mixture obtained by mixing two or more compounds or simple substances (hereinafter, the compounds and the simple substance are also collectively referred to as a compound and the like). It is sufficient if the entire composition material, that is, any of the compound and the like contained in the composition material contains the divalent element A, the halogen element X, and the nitrogen element. In addition, the composition material may contain therein a compound and the like containing none of the divalent element A, halogen element X, and nitrogen element.

An energy storage device according to another aspect of the present invention is an energy storage device containing the sulfide solid electrolyte according to an aspect of the present invention.

Even when the sulfide solid electrolyte is left under an air atmosphere during the process of manufacturing the energy storage device, or the like, the energy storage device achieves favorable energy storage device performance, because the ionic conductivity of the sulfide solid electrolyte is sufficiently recovered by drying again.

An electronic device according to another aspect of the present invention is an electronic device including the energy storage device according to an aspect of the present invention. The electronic device is capable of achieving favorable electronic device performance.

An automobile according to another aspect of the present invention is an automobile including the energy storage device according to an aspect of the present invention. The automobile is capable of achieving favorable automobile performance.

Hereinafter, a sulfide solid electrolyte, a method for producing a sulfide solid electrolyte, an energy storage device, and an energy storage apparatus according to an embodiment of the present invention, and other embodiments will be described in detail. It is to be noted that the names of the respective constituent members (respective constituent elements) for use in the respective embodiments may be different from the names of the respective constituent members (respective elements) for use in the background art. In addition, the element names may be represented by the element symbols.

<Sulfide Solid Electrolyte>

(Crystal Structure)

The sulfide solid electrolyte according to an embodiment of the present invention has a crystal structure. The sulfide solid electrolyte preferably includes an HICP as a crystal structure. More specifically, the sulfide solid electrolyte preferably has diffraction peaks at diffraction angles $2\theta$ in the range of $19.9° \pm 0.5°$ and the range of $29.3° \pm 0.5°$ in an X-ray diffraction diagram with a CuKa ray used. When the sulfide solid electrolyte has a peak derived from the HICP, favorable ionic conductivity can be achieved.

The sulfide solid electrolyte may have a crystal structure other than the HICP. Examples of the other crystal structure include LGPS-type structures, argyrodite-type structures, $Li_7P_3S_{11}$, and Thio-LISICON-based structures. The sulfide solid electrolyte may include an amorphous part.

In an embodiment of the sulfide solid electrolyte, the content of a phase with a low ionic conductivity (LICP: Low Ion Conduction Phase) with diffraction peaks at diffraction angles $2\theta$ in the range of $21.0° \pm 0.5°$ and the range of $28.0° \pm 0.5°$ in an X-ray diffraction diagram with a CuKa ray used is preferably relatively lower than the HICP. In such a case, the ionic conductivity of the sulfide solid electrolyte is further increased.

The sulfide solid electrolyte preferably has low diffraction peaks derived from the LICP, appearing at the diffraction angles $2\theta$ in the range of $21.0° \pm 0.5°$ and the range of $28.0° \pm 0.5°$ in an X-ray diffraction diagram with a CuKa ray used. In addition, in an X-ray diffraction diagram with a CuKa ray used, the intensity ratio $I_H/I_L$ of a diffraction peak intensity $I_H$ derived from the HICP at the diffraction angle $2\theta$ of $19.9° \pm 0.5°$ to a diffraction peak intensity $I_L$ derived from the LICP at the diffraction angle $2\theta$ of $21.0° \pm 0.5°$ preferably has a lower limit of 1, more preferably 2. The intensity ratio $I_H/I_L$ is related to the abundance ratio between the HICP and LICP included in the sulfide solid electrolyte. More specifically, the increased intensity ratio $I_H/I_L$ indicates that the content of the LICP is relatively low with respect to the HICP. The upper limit of the intensity ratio $I_H/I_L$ is not particularly limited. When $I_L$ is 0, the intensity ratio $I_H/I_L$ is infinite, which is included in the intensity ratio of 1 or more.

For the sulfide solid electrolyte, in an X-ray diffraction diagram with a CuKa ray used, a diffraction peak with the highest diffraction intensity, a diffraction peak with the second highest diffraction intensity, a diffraction peak with the third highest diffraction intensity, or a diffraction peak with the fourth highest diffraction intensity is preferably located in the range of $19.9° \pm 0.5°$, a diffraction peak with the highest diffraction intensity, a diffraction peak with the second highest diffraction intensity, or a diffraction peak with the third highest diffraction intensity is more preferably located in the range of $19.9° \pm 0.5°$, and a diffraction peak with the highest diffraction intensity or a diffraction peak with the second highest diffraction intensity is still more preferably located in the range of $19.9° \pm 0.5°$. As mentioned above, the diffraction peak in the range of $19.9° \pm 0.5°$ is derived from the HICP. Accordingly, in such a case, the sulfide solid electrolyte can be considered to have an HICP sufficiently formed, and is capable of achieving a high ionic conductivity.

(Composition)

The sulfide solid electrolyte according to an embodiment of the present invention contains one, or two or more divalent elements A, one, or two or more halogen elements X, and a nitrogen element as constituent elements.

In the sulfide solid electrolyte according to an embodiment of the present invention, the divalent element A and the halogen element X make a combination such that a compound $A_{0.5}X$ composed of the elements A and X is higher in hydration energy than LiI. The hydration energy of each of the compounds $A_{0.5}X$ and LiI is determined by the first-principles calculation described in detail later, and the hydration energy of LiI is -11.5 meV/atom. Accordingly, the divalent element A and the halogen element X make a combination such that the hydration energy of the compound $A_{0.5}X$ exceeds - 11.5 meV/atom. The combination of the divalent element A and halogen element X is preferably a combination such that the hydration energy of the compound $A_{0.5}X$ is -4 meV/atom or more, 0 meV/atom or more, 2 meV/atom or more, or further 4 meV/atom or more. In contrast, the upper limit of the hydration energy of the compound $A_{0.5}X$ may be, for example, 200 meV/atom, or may be 100 meV/atom.

(Calculation of Hydration Energy by First-principles Calculation)

Hereinafter, a method for calculating the hydration energy of each of the compounds $A_{0.5}X$ and LiI by the first-principles calculation will be described in detail. The first-principles calculation is a calculation method of predicting properties in a non-empirical manner, which is an approach that is capable of calculating the total energy of a model including atoms with known atomic numbers and spatial coordinates, and the energy band structures of electrons. The calculation method includes two roughly classified types of "wave function theory" system and "density functional theory" system. The calculation method used in the specification of the present application is based on the density functional theory.

For the first-principles calculation, calculation software of Vienna Ab-initio Simulation Package (VASP) can be used. The calculation conditions are as follows. The k point is set such that the k-resolution value is 1000 ± 200. The k-resolution is the product of the number of atoms in a unit cell and the k points in a, b, and c-axis directions. When a substance to be subjected to the calculation contains a transition metal element (where the 3d orbitals are not closed shells in the state of a cation with a valence considered stable, with electrons in the 3d orbitals), the value of Hubbard Ueff is set. For the value of Hubbard Ueff, a value that is registered in the crystalline structure database "Materials Project" (https://materialsproject.org/#search/materials) is used.

Cut-off energy of plane wave basis function: 520 eV
Approximation of exchange-correlation interaction: GGA + U
Pseudopotential: PAW (PBEsol)
k point: k-resolution = 1000 ± 200
Energy smearing: Gaussian method

The calculation results shown in Table 3 and the like, which will be described later, are based on the above-mentioned conditions with the use of the calculation software described above.

A procedure for calculating the "amount of change in total energy by hydration reaction" (hydration energy) described in Table 3 will be described below.

$$LiI + H_2O \rightarrow LiI \cdot H_2O ... \qquad i$$

$$A_{0.5}X + H_2O \rightarrow A_{0.5}X \cdot H_2O ... \qquad ii$$

(A = Mg, Ca, Sr, Ba, Mn, Cu, or Zn, and X = F, Cl, Br, or I)

The amount of change in total energy by a hydration reaction based on the formula i or ii is determined in accordance with the following procedures (1) to (4). More specifically, the amount of change in total energy in the case of a hydration reaction between a halide (LiI or $A_{0.5}X$) and water at a molar ratio of 1 : 1 is determined, and considered as the hydration energy.

(1) Calculation of Total Energy of Halide (LiI or $A_{0.5}X$)

The total energy of the halide in a solid state is calculated by the first-principles calculation. As for the crystal structure of the halide, a crystal structure with the ID number listed in Table 1 is used, which is registered in the crystalline structure database "Materials Project" (https://materialsproject.org/#search/materials).

[Table 1]

| Halide | | Crystal structure (ID number registered in Materials Project) |
|---|---|---|
| No. | Composition | |
| - | LiI | mp-568273 |
| 1 | $Mg_{0.5}F$ | mp-1249 |
| 2 | $Mg_{0.5}Cl$ | mp-23210 |
| 3 | $Mg_{0.5}Br$ | mp-30034 |
| 4 | $Mg_{0.5}I$ | mp-23210 |
| 5 | $Ca_{0.5}F$ | mp-2741 |
| 6 | $Ca_{0.5}Cl$ | mp-571642 |
| 7 | $Ca_{0.5}Br$ | mp-22888 |
| 8 | $Ca_{0.5}I$ | mp-23210 |
| 9 | $Sr_{0.5}F$ | mp-981 |
| 10 | $Sr_{0.5}Cl$ | mp-23209 |
| 11 | $Sr_{0.5}Br$ | mp-32711 |
| 12 | $Sr_{0.5}I$ | mp-23181 |
| 13 | $Ba_{0.5}F$ | mp-1029 |
| 14 | $Ba_{0.5}Cl$ | mp-568662 |
| 15 | $Ba_{0.5}Br$ | mp-568536 |
| 16 | $Ba_{0.5}I$ | mp-568536 |
| 17 | $Mn_{0.5}F$ | mp-556585 |
| 18 | $Mn_{0.5}Cl$ | mp-28233 |
| 19 | $Mn_{0.5}Br$ | mp-571084 |
| 20 | $Mn_{0.5}I$ | mp-28013 |
| 21 | $Cu_{0.5}F$ | mp-1229 |
| 22 | $Cu_{0.5}Cl$ | mp-1238872 |
| 23 | $Cu_{0.5}Br$ | mp-23219 |
| 24 | $Cu_{0.5}I$ | mp-1147667 |
| 25 | $Zn_{0.5}F$ | mp-1873 |
| 26 | $Zn_{0.5}Cl$ | mp-647579 |
| 27 | $Zn_{0.5}Br$ | mp-647579 |
| 28 | $Zn_{0.5}I$ | mp-22909 |

(2) Calculation of Total Energy of Water

Similarly, the total energy of water in a solid state is calculated by the first-principles calculation. As for the crystal structure of the water, the crystal structure (ID number: mp-697111) registered in the "Materials Project" is used.

(3) Calculation of Total Energy of Hydrate (LiI $\cdot H_2O$ or $A_{0.5}X \cdot H_2O$)

Similarly, the total energy of the hydrate in a solid state is calculated by the first-principles calculation. As for the crystal structure of the hydrate, the crystal structure with the ID number listed in Table 2 is used, which is registered in the "Materials Project".

[Table 2]

| Hydrate | | Crystal structure (ID number registered in Materials Project) |
|---|---|---|
| No. | Composition | |
| - | $LiI \cdot H_2O$ | mp-1180504 |
| 1 | $Mg_{0.5}F \cdot H_2O$ | mp-24336 |
| 2 | $Mg_{0.5}Cl \cdot H_2O$ | mp-24336 |
| 3 | $Mg_{0.5}Br \cdot H_2O$ | mp-24336 |
| 4 | $Mg_{0.5}I \cdot H_2O$ | mp-24336 |
| 5 | $Ca_{0.5}F \cdot H_2O$ | mp-24336 |
| 6 | $Ca_{0.5}Cl \cdot H_2O$ | mp-24090 |
| 7 | $Ca_{0.5}Br \cdot H_2O$ | mp-24336 |
| 8 | $Ca_{0.5}I \cdot H_2O$ | mp-24336 |
| 9 | $Sr_{0.5}F \cdot H_2O$ | mp-24090 |
| 10 | $Sr_{0.5}Cl \cdot H_2O$ | mp-24090 |
| 11 | $Sr_{0.5}Br \cdot H_2O$ | mp-24090 |
| 12 | $Sr_{0.5}I \cdot H_2O$ | mp-24090 |
| 13 | $Ba_{0.5}F \cdot H_2O$ | mp-24090 |
| 14 | $Ba_{0.5}Cl \cdot H_2O$ | mp-24090 |
| 15 | $Ba_{0.5}Br \cdot H_2O$ | mp-24090 |
| 16 | $Ba_{0.5}I \cdot H_2O$ | mp-24090 |
| 17 | $Mn_{0.5}F \cdot H_2O$ | mp-24336 |
| 18 | $Mn_{0.5}Cl \cdot H_2O$ | mp-24336 |
| 19 | $Mn_{0.5}Br \cdot H_2O$ | mp-24336 |
| 20 | $Mn_{0.5}I \cdot H_2O$ | mp-24336 |
| 21 | $Cu_{0.5}F \cdot H_2O$ | mp-24090 |
| 22 | $Cu_{0.5}Cl \cdot H_2O$ | mp-24090 |
| 23 | $Cu_{0.5}Br \cdot H_2O$ | mp-24090 |
| 24 | $Cu_{0.5}I \cdot H_2O$ | mp-24336 |
| 25 | $Zn_{0.5}F \cdot H_2O$ | mp-24336 |
| 26 | $Zn_{0.5}Cl \cdot H_2O$ | mp-24336 |
| 27 | $Zn_{0.5}Br \cdot H_2O$ | mp-24336 |
| 28 | $Zn_{0.5}I \cdot H_2O$ | mp-24336 |

(4) Calculation of Hydration Energy

The amount of change in total energy by the hydration reaction, that is, the hydration energy is determined from the difference between: the sum of the total energy of the halide and the total energy of the water, calculated by (1) and (2) mentioned above; and the total energy of the hydrate, calculated by (3) mentioned above. The calculation results are shown in Table 3.

[Table 3]

| Halide | | Amount of change in total energy by hydration reaction (meV/atom) |
|---|---|---|
| No. | Composition | |
| - | LiI | -11.5 |
| 1 | $Mg_{0.5}F$ | 41.4 |
| 2 | $Mg_{0.5}Cl$ | -12.8 |
| 3 | $Mg_{0.5}Br$ | -13.8 |
| 4 | $Mg_{0.5}I$ | -17.2 |
| 5 | $Ca_{0.5}F$ | 65.6 |
| 6 | $Ca_{0.5}Cl$ | 5.6 |
| 7 | $Ca_{0.5}Br$ | 3.5 |
| 8 | $Ca_{0.5}I$ | 9.3 |
| 9 | $Sr_{0.5}F$ | 62.0 |
| 10 | $Sr_{0.5}Cl$ | 21.4 |
| 11 | $Sr_{0.5}Br$ | 6.0 |
| 12 | $Sr_{0.5}I$ | -2.0 |
| 13 | $Ba_{0.5}F$ | 55.3 |
| 14 | $Ba_{0.5}Cl$ | 25.2 |
| 15 | $Ba_{0.5}Br$ | 14.0 |
| 16 | $Ba_{0.5}I$ | 5.9 |
| 17 | $Mn_{0.5}F$ | 24.1 |
| 18 | $Mn_{0.5}Cl$ | 18.6 |
| 19 | $Mn_{0.5}Br$ | 24.2 |
| 20 | $Mn_{0.5}I$ | 34.1 |
| 21 | $Cu_{0.5}F$ | -17.8 |
| 22 | $Cu_{0.5}Cl$ | 51.7 |
| 23 | $Cu_{0.5}Br$ | 87.0 |
| 24 | $Cu_{0.5}I$ | 42.1 |
| 25 | $Zn_{0.5}F$ | 11.7 |
| 26 | $Zn_{0.5}Cl$ | 41.1 |
| 27 | $Zn_{0.5}Br$ | 58.6 |
| 28 | $Zn_{0.5}I$ | 88.8 |

The amount of change in total energy by the hydration reaction for each of the halides Nos. 1, 5 to 20, and 22 to 28 in Table 3 (the hydration energy of each halide) is higher than the amount of change in energy by the hydration reaction of LiI (the hydration energy of LiI).

Examples of the divalent element A include Group II elements (alkaline earth metals) such as Mg, Ca, Sr, and Ba, Mn, Cu, and Zn. As the divalent element A, a Group II element may be preferable, or a fourth period element (such as Ca, Mn, Cu, and Zn) may be preferable. As the divalent element A, Ca, Mn, and Zn are more preferable, and Zn is particularly preferable. When the divalent element A contains Zn, the ionic conductivity before being left in an air atmosphere is also increased, in addition to the recovery rate.

It is to be noted that in the case of using a monovalent element other than Li (an element other than Li, which can serve as a monovalent cation) in place of the divalent element A, a crystal structure of a compound containing the monovalent element used as a raw material may remain depending on the production method, thereby causing the performance of a resultant sulfide solid electrolyte to be degraded. In contrast, a compound containing the divalent element A has a crystal structure that is easily broken by, for example, a mechanical milling treatment, thus, a crystal structure of the compound containing the divalent element A, used as a raw material, is unlikely to remain, and the performance of a resultant sulfide solid electrolyte can be kept from being degraded.

Examples of the halogen element X include F, Cl, Br, and I, Br and I are preferable, and I is more preferable.

In the sulfide solid electrolyte, the combination of the divalent element A and the halogen element X preferably satisfies any of the following a to c.

a: the divalent element A is one, or two or more elements selected from the group consisting of Ca, Sr, Ba, Mn, and Zn, and the halogen element X is one, or two or more elements selected from the group consisting of F, Cl, Br, and I.
b: the divalent element A is Mg, and the halogen element X is F.
c: the divalent element A is Cu, and the halogen element X is one, or two or more elements selected from the group consisting of Cl, Br, and I.

The a to c mentioned above are each a combination of the divalent element A and the halogen element X such that the hydration energy of the compound $A_{0.5}X$, determined by the first-principles calculation as described above, is higher than the hydration energy (-11.5 meV/atom) of LiI (see Table 3).

The a mentioned above is preferably the following a1 or a2.

a1: the divalent element A is one, or two or more elements selected from the group consisting of Ca, Ba, Mn, and Zn, and the halogen element X is one, or two or more elements selected from the group consisting of F, Cl, Br, and I.
a2: the divalent element A is Sr, and the halogen element X is one, or two or more elements selected from the group consisting of F, Cl, and Br.

The a1, a2, b, and c mentioned above are each a combination of the divalent element A and the halogen element X such that the compound $A_{0.5}X$ has hydration energy of 0 meV/atom or more determined by the first-principles calculation (see Table 3). Accordingly, when the divalent element A and the halogen element X make the combination, the recovery rate of the sulfide solid electrolyte is further increased.

In the sulfide solid electrolyte, the halogen element X preferably contains at least I. The sulfide solid electrolyte including the HICP has a tendency to have an ionic conductivity increased when the electrolyte contains I.

In the sulfide solid electrolyte, the halogen element X preferably contains Br. The sulfide solid electrolyte including the HICP may have an ionic conductivity increased when the electrolyte contains Br.

In the sulfide solid electrolyte, the halogen element X more preferably contains Br and I. The sulfide solid electrolyte including the HICP has a tendency to have an ionic conductivity increased when the electrolyte contains Br and I.

In the sulfide solid electrolyte, the molar ratio (I/X) of the content of I to the content of the halogen element X is preferably 0.1 or more and 1.0 or less, more preferably 0.2 or more and 0.9 or less, still more preferably 0.3 or more and 0.8 or less, and may be even more preferably 0.4 or more and 0.7 or less. The molar ratio (I/X) within such a range may make the HICP more likely to be deposited, and increase the ionic conductivity.

In the sulfide solid electrolyte, the molar ratio ((Br + I)/X) of the total content of Br and I to the content of the halogen element X is preferably 0.5 or more and 1.0 or less, more preferably 0.6 or more and 1.0 or less, still more preferably 0.7 or more and 1.0 or less, and may be even more preferably 0.8 or more and 1.0 or less. The molar ratio ((Br + I)/X) within such a range may make the HICP more likely to be deposited, and increase the ionic conductivity.

When the sulfide solid electrolyte contains Br and I, the molar ratio (Br/(Br + I)) of Br to the total content of Br and I may be more than 0 and less than 1, is preferably 0.1 or more and 0.9 or less, more preferably 0.2 or more and 0.8 or less, and may be still more preferably 0.3 or more and 0.7 or less. The molar ratio (Br/(Br + I)) within such a range may make the HICP more likely to be deposited, and increase the ionic conductivity.

In the sulfide solid electrolyte, the halogen element X may contain substantially no Cl. The phrase "containing substantially no Cl" means avoiding at least intentionally containing Cl.

In addition, in the sulfide solid electrolyte, the halogen element may contain Cl, and in this case, the molar ratio (Cl/X) of the content of Cl to the content of the halogen element X may be more than 0 and 0.3 or less, 0.01 or more and 0.2 or less, or 0.05 or more and 0.1 or less. The molar ratio (Cl/X) within such a range may make the water resistance more favorable.

In the sulfide solid electrolyte, the halogen element X may contain substantially no F. The phrase "containing substantially no F" means avoiding at least intentionally containing F.

In addition, in the sulfide solid electrolyte, the halogen element X may contain F, and in this case, the molar ratio (F/X) of the content of F to the content of the halogen element X may be more than 0 and 0.3 or less, 0.01 or more and 0.2 or less, or 0.05 or more and 0.1 or less. The molar ratio (F/X) within such a range may make the water resistance more favorable.

The halogen element X in the sulfide solid electrolyte is preferably composed of only I, or only Br, and I. The halogen element X in the sulfide solid electrolyte has such a composition, thereby making the HICP more likely to be deposited, and increasing the ionic conductivity.

The sulfide solid electrolyte preferably further contains a lithium element as a constituent element, and preferably has lithium ion conductivity.

The sulfide solid electrolyte preferably further contains a lithium element, a phosphorus element, and a sulfur element as constituent elements.

Hereinafter, suitable content ratios for respective constituent elements based on the content of the phosphorus element, which is one of the constituent elements, will be described.

In the sulfide solid electrolyte, the molar ratio (A/P) of the content of the divalent element A to the content of the phosphorus element is preferably 0.01 or more and 0.4 or less, more preferably 0.03 or more and 0.3 or less, still more preferably 0.05 or more and 0.2 or less. The molar ratio (A/P) is set to be equal to or more than the lower limit mentioned above, thereby resulting in containing the divalent element A in a sufficient amount, and developing a tendency to increase the recovery rate and the like. From such a viewpoint, the lower limit of the molar ratio (A/P) may be more preferably 0.1. In contrast, the molar ratio (A/P) is set to be equal to or less than the upper limit mentioned above, thereby developing a tendency to increase the ionic conductivity, because of, for example, the relatively increased proportion of lithium ions contained among all of the cations. From such a viewpoint, the upper limit of the molar ratio (A/P) may be more preferably 0.1, 0.07, or 0.05.

In the sulfide solid electrolyte, the molar ratio (X/P) of the halogen element X to the content of the phosphorus element is preferably 0.1 or more and 2 or less, more preferably 0.2 or more and 1.5 or less, and still more preferably 0.3 or more and 1 or less. Setting the molar ratio (X/P) to be equal to or more than the lower limit mentioned above may make the HICP more likely to be deposited, and increase the ionic conductivity. In addition, setting the molar ratio (X/P) to be equal to or less than the upper limit mentioned above may make the crystal phase of lithium halide unlikely to remains, and increase the ionic conductivity.

In the sulfide solid electrolyte, the molar ratio (N/P) of the nitrogen element to the content of the phosphorus element is preferably 0.01 or more and 1.2 or less, more preferably 0.1 or more and 1.0 or less, still more preferably 0.2 or more and 0.6 or less. The molar ratio (N/P) is set to be equal to or more than the lower limit mentioned above, thereby further keeping the ionic conductivity from being decreased when the sulfide solid electrolyte is left in an air atmosphere, and further increasing the recovery rate. In addition, setting the molar ratio (N/P) to be equal to or less than the upper limit mentioned above may increase the ionic conductivity.

In the sulfide solid electrolyte, the molar ratio (Li/P) of the content of the lithium element to the content of the phosphorus element may be preferably 1 or more and 5 or less, more preferably 2 or more and 4.5 or less, still more preferably 2.5 or more and 4 or less. The molar ratio (Li/P) is set to be equal to or more than the lower limit mentioned above, thereby making the HICP more likely to be deposited. In addition, setting the molar ratio (Li/P) to be equal to or less than the upper limit mentioned above increases the proportion of lithium ions contained among all of the cations, and developing a tendency to increase the ionic conductivity.

In the sulfide solid electrolyte, the molar ratio (S/P) of the content of the sulfur element to the content of the phosphorus element is preferably 2 or more and 6 or less, more preferably 3 or more and 5 or less, still more preferably 3.5 or more and 4.5 or less. The molar ratio (S/P) within the range mentioned above makes the HICP more likely to be deposited, and increases the ionic conductivity.

The sulfide solid electrolyte may further contain another element, besides the divalent element A, the halogen element X, the nitrogen element, the lithium element, the phosphorus element, and the sulfur element. Examples of the other element include monovalent elements such as alkali metal elements other than the lithium element, and an oxygen element. The other element also encompasses a divalent element B other than the divalent element A (a divalent element that makes a combination such that a compound $B_{0.5}X$ composed of the divalent element together with the halogen element X is lower in hydration energy than LiI), and a halogen element other than the halogen element X. The divalent element B may be one, or two or more divalent elements. The molar ratio of the content of the other element to the content of the phosphorus element in the sulfide solid electrolyte may be, however, preferably, for example, less than 0.1, more preferably less than 0.01, or the sulfide solid electrolyte may contain substantially no other element. When the sulfide solid electrolyte further contains one, or two or more divalent elements B other than the divalent element A, the molar ratio of the content of the divalent elements B to the total content of the divalent elements contained in the sulfide solid electrolyte (the total content of the divalent element A and the divalent elements B) may be, for example, 0 or more and less than 0.5. The molar ratio of the content of the divalent elements B is preferably 0.4 or less, more preferably 0.3 or less, still more preferably 0.2 or less. Setting the molar ratio of the content of the divalent elements B to be equal to or less then the upper limit mentioned above allows the disadvantage caused by containing the divalent elements B to be eliminated or alleviated. In some aspects, the molar ratio of the content of the divalent elements B may be 0.1 or less, or 0.05 or less (for example, 0.01 or less, typically 0.005 or less). The sulfide solid electrolyte disclosed herein can be preferably implemented in an aspect in which the sulfide solid electrolyte contains substantially neither of the divalent elements B. The phrase "sulfide solid electrolyte contains substantially neither of the divalent elements B" means avoiding at least intentionally containing the divalent elements B.

Preferably, the sulfide solid electrolyte may further contain an element M as a constituent element, and the element M may be an element other than the divalent element A, and at least one selected from the group consisting of Al, Ta, Si, Sc, Mg, Nb, B, Hf, C, Zr, and Ti. It is to be noted that the element M does not encompass the divalent element A. When the sulfide solid electrolyte further contains the element M, in the process of producing the sulfide solid electrolyte, the discharge of the nitrogen element, which is an element that has the effect of suppressing the poorly reversible hydration reaction, to the outside of the system is suppressed, thus further keeping the ionic conductivity from being decreased when the sulfide solid electrolyte is left in an air atmosphere, and further increasing the recovery rate. Among the elements, Al is preferable as the element M.

In addition, regarding the other element mentioned above, when a compound containing a monovalent element other than the lithium element is used for a raw material, the crystal structure of the compound containing the monovalent element used for the raw material may remain depending on the production method, thereby causing the performance of a resultant sulfide solid electrolyte to be degraded. Alternatively, when a compound containing a monovalent element is used for a raw material, the treatment time may be prolonged for eliminating the crystal structure of the compound containing the monovalent element. Accordingly, it may be preferable for the sulfide solid electrolyte not to use the compound containing a monovalent element other than the lithium element for a raw material. For this reason, the sulfide solid electrolyte has a tendency to preferably contain substantially no monovalent element other than the lithium element, and has a tendency to preferably contain substantially no alkali metal element other than the lithium element. For example, the molar ratio of the content of the monovalent element other than the lithium element or the alkali metal element other than the lithium element to the content of the phosphorus element in the sulfide solid electrolyte may be, for example, preferably less than 0.1, more preferably less than 0.01, still more preferably 0.

In an embodiment of the present invention, the sulfide solid electrolyte may be represented by the following formula 1.

[Chemical Formula 3]

$$(100-u-v-v')\{(1-z)[xLi_2S \cdot yP_2S_5] \cdot zLi_\alpha M_\beta N\} \cdot uA_{0.5}X \cdot vLiI \cdot v'LiX' \cdot wY \cdots \qquad 1$$

In the formula 1, A is the divalent element A mentioned above, X is the halogen element X mentioned above, X' is a halogen element other than I, M is an element other than the divalent element A, and is at least one element selected from the group consisting of Al, Ta, Si, Sc, Mg, Nb, B, Hf, C, Zr, and Ti, $\alpha$ and $\beta$ are numbers that give a stoichiometric ratio depending on the type of the element M, Y is one, or two or more elements other than Li, S, P, N, I, A, M, X, and X', x is a number of 0.5 or more and 0.8 or less, y is a number of 0.2 or more and 0.5 or less, z is a number of more than 0 and 0.5 or less, u is a number of more than 0 and 30 or less, v is a number of 0 or more and 30 or less, v' is a number of 0 or more and 30 or less, and w is a number of 0 or more and 20 or less.

It is to be noted the formula 1 is intended to represent the content ratios of elements Li, S, P, N, I, A, M, X, X', and Y (composition formula), and not intended to specify a compound as a raw material. In addition, I in LiI and X' in LiX' in the formula 1 may be the same element as X. More specifically, I and X' may be specific halogen elements X that satisfy the condition that $A_{0.5}X$ is higher in hydration energy than LiI.

Examples of the A mentioned above include Mg, Ca, Sr, Ba, Mn, Cu, and Zn, and Ca, Mn, and Zn are preferable, and Zn is more preferable.

The M mentioned above is preferably Al.

Examples of the X mentioned above include F, Cl, Br, and I, and Br and I are preferable, and I is more preferable.

Examples of the X' mentioned above include F, Cl, and Br, and Br is preferable.

Examples of the Y mentioned above include Na and O.

The x mentioned above is preferably 0.6 or more and 0.78 or less, more preferably 0.65 or more and 0.76 or less.

The y mentioned above is preferably 0.22 or more and 0.4 or less, more preferably 0.24 or more and 0.35 or less.

The sum (x + y) of the x and the y is preferably 0.9 or more and 1.1 or less, and the lower limit thereof is more preferably 0.95.

The z is preferably 0.05 or more and 0.4 or less, more preferably 0.1 or more and 0.3 or less.

The u is preferably 1 or more and 30 or less, more preferably 2 or more and 25 or less, still more preferably 3 or more and 20 or less. The lower limit of the u may be even more preferably 4 or 6. The upper limit of the u may be even more preferably 10, 8, or 6.

The v is preferably 0 or more and 20 or less. The upper limit of the v may be more preferably 15, still more preferably 10, even more preferably 5. The lower limit of the v may be preferably 1 or 4.

The sum (u + v) of the u and the v is preferably 1 or more and 30 or less, more preferably 3 or more and 25 or less, and may be still more preferably 5 or more and 20 or less.

The v' mentioned above is preferably 0 or more and 25 or less, more preferably 5 or more and 20 or less, and the lower limit may be still more preferably 10.

The sum (u + v + v') of the u, the v, and the v' is preferably 5 or more and 40 or less, more preferably 10 or more and 35 or less, and may be still more preferably 15 or more and 30 or less.

The w mentioned above may be 0 or more and 10 or less, 0 or more and 5 or less, or 0.

When the sulfide solid electrolyte has such a composition, the recovery rate and the like have a tendency to be further improved.

The ratio (v/u) of the v to the u is preferably 0 or more and 10 or less, and the upper limit thereof is more preferably 5, still more preferably 3, and may be even more preferably 2, 1, or 0.5. In such a case, a part derived from or related to LiI, which is easily hydrated, can be considered sufficiently replaced with a part derived from or related to the compound $A_{0.5}X$, which is hardly hydrated, the recovery rate and the like have a tendency to be further improved.

(Physical Properties, Applications, and the like)

The lower limit of the ionic conductivity of the sulfide solid electrolyte at 25°C is preferably 1 mS/cm, more preferably 2 mS/cm, still more preferably 3 mS/cm, even more preferably 4 mS/cm. The ionic conductivity of the sulfide solid electrolyte at 25°C is equal to or more than the lower limit mentioned above, thereby allowing the charge-discharge performance of an energy storage device including the sulfide solid electrolyte to be further improved. The upper limit of the ionic conductivity is not particularly limited, and is, for example, 50 mS/cm, and may be 25 mS/cm.

Further, the ionic conductivity of the sulfide solid electrolyte is determined by measuring an alternating-current impedance by the following method. Under an argon atmosphere with a dew point of -50°C or lower, 120 mg of a sample powder is put into a powder molder of 10 mm in inner diameter, and then subjected to uniaxial pressure molding at 50 MPa or less by using a hydraulic press. After pressure release, 120 mg of a SUS316L powder as a current collector is put onto the upper surface of the sample, and then subjected to uniaxial pressure molding at 50 MPa or less by using the hydraulic press again. Next, 120 mg of the SUS316L powder as a current collector is put onto the lower surface of the sample, and then subjected to uniaxial pressure molding at 360 MPa for 5 minutes to obtain a pellet for ionic conductivity measurement. This pellet for ionic conductivity measurement is inserted into an HS cell from Hohsen Corp., and the alternating-current impedance is measured under a predetermined temperature. The measurement conditions are an applied voltage amplitude of 20 mV, a frequency range from 1 MHz to 100 mHz, and a measurement temperature of 25°C.

The lower limit of the electron conductivity of the sulfide solid electrolyte at 25°C is preferably $1 \times 10^{-6}$ S/cm, more preferably $1 \times 10^{-7}$ S/cm, still more preferably $1 \times 10^{-8}$ S/cm. The electron conductivity of the sulfide solid electrolyte is equal to or less than the upper limit mentioned above, thereby allowing the charge-discharge performance of an energy storage device including the sulfide solid electrolyte to be further improved.

The shape of the sulfide solid electrolyte is not particularly limited, and is typically granular, massive, or the like. The sulfide solid electrolyte can be suitably used as an electrolyte of an energy storage device such as a lithium ion secondary battery, particularly a lithium ion energy storage device. Among them, the sulfide solid electrolyte can be particularly suitably used as an electrolyte of an all-solid-state battery. It is to be noted that the sulfide solid electrolyte can be used for any of a positive electrode layer, an isolation layer, a negative electrode layer and the like in the energy storage device.

<Method for Producing Sulfide Solid Electrolyte>

A method for producing a sulfide solid electrolyte according to an embodiment of the present invention includes treating a composition material containing, as constituent elements, one, or two or more divalent elements A, one, or two or more halogen elements X, and a nitrogen element, and the divalent element A and the halogen element X make a combination such that a compound $A_{0.5}X$ composed of the divalent element A and the halogen element X is higher in hydration energy than LiI.

(Composition Material)

The composition material for use as a raw material in the production method typically contains a lithium element, a phosphorus element, and a sulfur element in addition to the divalent element A, the halogen element X, and the nitrogen element. The composition material is typically a mixture of two or more compounds or the like, containing at least one element of a lithium element, a phosphorus element, a sulfur element, the divalent element A, the halogen element X, and a nitrogen element. It is sufficient if any of the compounds or the like contained in the composition material (mixture) contains a lithium element, a phosphorus element, a sulfur element, the divalent element A, the halogen element X, and a nitrogen element. One of the compounds may contain therein two or more elements from among a lithium element, a phosphorus element, a sulfur element, the divalent element A, the halogen element X, and a nitrogen element. For example, examples of the compound containing a lithium element and a sulfur element include $Li_2S$ described later, examples of the compound containing a phosphorus element and a sulfur element include $P_2S_5$ described later, and examples of the compound containing the divalent element A and the halogen element X include halides ($A_{0.5}X$) of the divalent element A, described later. The composition material may contain a compound or the like containing none of a lithium element, a phosphorus element, a sulfur element, the divalent element A, the halogen element X, and a nitrogen element. The composition material may contain a compound $A_{0.5}X$, or may contain no compound $A_{0.5}X$.

Examples of the compound or the like containing a lithium element include $Li_2S$, $Li_2O$, $Li_3N$, $Li_2CO_3$, and metallic lithium. In addition, the compound may be a lithium halide described later, $Li_{1.5}Al_{0.5}N$, or the like. Among these examples, $Li_2S$, the lithium halide, and $Li_{1.5}Al_{0.5}N$ are preferable. One of the compounds or the like containing a lithium element may be used alone, or two or more thereof may be used in mixture.

Examples of the compound or the like containing a phosphorus element include $P_2S_3$, $P_2S_5$, $P_2O_5$, $P_3N_5$, and elemental phosphorus. Among these examples, $P_2S_3$ and $P_2S_5$ are preferable, and $P_2S_5$ is more preferable. One of the compounds or the like containing a phosphorus element may be used alone, or two or more thereof may be used in mixture.

Examples of the compound or the like containing a sulfur element include $Li_2S$, $P_2S_3$, $P_2S_5$, $Al_2S_3$, MgS, $SiS_2$, and elemental sulfur. Among these examples, $Li_2S$, $P_2S_3$ and $P_2S_5$ are preferable, and $Li_2S$ and $P_2S_5$ are more preferable. One of the compounds or the like containing a sulfur element may be used alone, or two or more thereof may be used in mixture.

Examples of the compound and the like containing the divalent element A include halides ($A_{0.5}X$), oxides, and nitrides of the divalent element A, and among these examples, the halides are preferable. Examples of the halides ($A_{0.5}X$) of the divalent element A include the respective halides of Nos. 1, 5 to 20, and 22 to 28 listed in Table 3. One of the compounds or the like containing the divalent element A may be used alone, or two or more thereof may be used in mixture.

Examples of the compound or the like containing a halogen element include LiF, LiCl, LiBr, LiI, $Br_2$, and $I_2$ in addition to the above-mentioned halides ($A_{0.5}X$) of the divalent element A. Among these examples, the halides of the divalent element A, LiI, and LiBr are preferable. One of the compounds or the like containing a halogen element may be used alone, or two or more thereof may be used in mixture.

As the compound or the like containing a nitrogen element, a compound containing a nitrogen element and the element M is preferable, and a compound represented by $L_{\alpha}M_{\beta}N$ (L is at least one element selected from the group consisting of Li, Na, and K, M is the element M mentioned above, and $\alpha$ and $\beta$ are numerical values that give a stoichiometric ratio depending on the type of the element M). Examples of such a compound include a raw material compound containing a lithium element, a nitrogen element, and the element M (hereinafter, also described as a Li-M-N-containing compound). The Li-M-N-containing compound can be produced by the following procedure. First, $Li_3N$ and a nitride of the element M are prepared, and mixed in a mortar or the like. Next, a pellet of the mixed raw material compound is produced. Next, the pellet is heat-treated to produce a Li-M-N-containing compound. It is to be noted that the means for preparing the Li-M-N-containing compound is not limited thereto, and the Li-M-N-containing compound may be prepared by other methods. For example, the raw materials for the Li-M-N-containing compound may be two or more compounds containing any of a lithium element, the element M, and a nitrogen element. The Li-M-N-containing compound may be prepared by a mechanical milling treatment. As the Li-M-N-containing compound, a compound that is industrially produced and sold may be prepared.

As the Li-M-N-containing compound, a lithium composite nitride of the element M is suitably used. Examples of the lithium composite nitride of the element M include lithium composite nitrides such as $Li_{1.5}Al_{0.5}N$, $Li_{1.5}B_{0.5}N$, $Li_{5/3}Si_{1/3}N$, $Li_{9/5}Si_{3/10}N$, LiMgN, $LiHf_{0.5}N$, $Li_{1.5}Sc_{0.5}N$, $LiZr_{0.5}N$, $Li_{5/3}Ti_{1/3}N$, $Li_{4/3}Ta_{1/3}N$, $Li_{7/4}Ta_{1/4}N$, $Li_{7/4}Nb_{1/4}N$, and $LiC_{0.5}N$. Among these examples, $Li_{1.5}Al_{0.5}N$, $Li_{1.5}B_{0.5}N$, and $Li_{5/3}Si_{1/3}N$ are preferable because the compounds are easily available. In addition, $Li_{1.5}Al_{0.5}N$ is particularly preferable from the viewpoint of suppressing the deposition of $Li_2S$, and $Li_{1.5}B_{0.5}N$ and $Li_{5/3}Si_{1/3}N$ are particularly preferable from the viewpoint of improving thermal stability of the HICP. $Li_{1.5}Al_{0.5}N$ and $Li_{1.5}B_{0.5}N$ are particularly preferable from the viewpoint of suppressing the discharge of the nitrogen element to the outside of the system in the process of producing the sulfide solid electrolyte.

The composition material may contain a compound containing the element M and a compound containing a nitrogen element. Examples of the compound containing the element M include oxides of the element M, sulfides of the element M, nitrides of the element M, and alloys of the element M and lithium. Examples of the sulfide of the element M include $Al_2S_3$ and $SiS_2$. Examples of the nitride of the element M include AlN, $Si_3N_4$, BN, and $Mg_3N_2$. One of the compounds containing the element M may be used alone, or two or more thereof may be used in mixture.

The element M in the production method is not particularly limited, as long as the element M is at least one element selected from the group consisting of aluminum, tantalum, silicon, scandium, magnesium, niobium, boron, hafnium, carbon, zirconium, and titanium. Among these elements, the element M is preferably any of aluminum, tantalum, silicon, scandium, magnesium, niobium, boron, hafnium, and carbon, and more preferably any one of aluminum, tantalum, silicon, scandium, magnesium, niobium, and boron, from the viewpoint of more reliably suppressing the discharge of the nitrogen element to the outside of the system in the process of producing the sulfide solid electrolyte. In addition, the element M is still more preferably any of aluminum, silicon, and boron, because the elements are easily available. In particular, the element M may be aluminum.

Examples of the compound containing a nitrogen element include $Li_3N$, $PN$, $P_3N_5$, $S_4N_4$, $S_2N_2$, $S_4N_2$, the Li=M-N containing compound. Among these examples, $Li_3N$ is preferable. One of the compounds containing a nitrogen element may be used alone, or two or more thereof may be used in mixture.

For example, the composition material may be a composition material containing $Li_2S$, $P_2S_5$, $Li_{1.5}Al_{0.5}N$, $A_{0.5}X$, and a lithium halide (such as LiI or LiBr) as an embodiment.

In the composition material, the molar ratio of the content of $A_{0.5}X$ to the total content of $A_{0.5}X$ and LiI is preferably 0.01 or more and 1 or less, and the lower limit is more preferably 0.1, still more preferably 0.3. In such a case, a sulfide solid electrolyte, in which LiI that is easily hydrated is sufficiently replaced with $A_{0.5}X$, is more likely to be obtained.

The suitable content of each element in the composition material is the same as the suitable content of each element in the sulfide solid electrolyte according to an embodiment of the present invention described above.

(Treatment Step)

In the production method, the composition material is subjected to a treatment to obtain a sulfide solid electrolyte. Examples of the treatment include a method of obtaining an intermediate by mechanical milling or the like and then heating the obtained intermediate. It is to be noted that the means for obtaining the intermediate is not limited to the mechanical milling or the like, and a method other than the mechanical milling, for example, a melt quenching method may be employed.

The mechanical milling may be either dry or wet, but is preferably wet mechanical milling because the compounds and the like of the raw materials can be mixed more uniformly. Examples of the mechanical milling include a case-driven mill, a medium stirring mill, milling with a high-speed rotary crusher or the like, a roller mill, and a jet mill. Examples of the case-driven mill include a rotary mill, a vibration mill, and a planetary mill. Examples of the medium stirring mill include an attritor, and a bead mill. Examples of the milling with a high-speed rotary crusher include a hammer mill, and a pin mill. Among these examples, the case-driven mill is preferable, and the planetary mill is particularly preferable.

The intermediate obtained through the mechanical milling or the like may have a crystal structure, but is preferably so-called sulfide glass. The term "sulfide glass" means a sulfide solid electrolyte including an amorphous structure. When the intermediate is sulfide glass, a sulfide solid electrolyte can be obtained, which has only a small amount of less stable crystal phase such as $Li_2S$ and has respective elements highly dispersed.

As for the heating, the intermediate obtained by the mechanical milling or the like is subjected to heating (heat treatment). Thus, a sulfide solid electrolyte is obtained, in which at least a part of the intermediate is crystallized, preferably crystallized into a phase of HICP. The heating (heat treatment) may be performed under a reduced pressure atmosphere or an inert gas atmosphere. The heating temperature range is, for example, preferably 150°C or higher and 300°C or lower, more preferably 170°C or higher and 270°C or lower, still more preferably 180°C or higher and 260°C or lower. The heating temperature is set to be equal to or greater than the lower limit mentioned above, thereby causing crystallization to proceed sufficiently, and providing a sulfide solid electrolyte with a sufficiently high ionic conductivity. In addition, the heating temperature is set to be equal to or less than the upper limit mentioned above, thereby keeping an LICP from being deposited, and providing a sulfide solid electrolyte with a higher ionic conductivity.

(Method for Selecting Raw Material Compound $L_{\alpha}M_{\beta}N$)

As described above, the use of the compound represented by $L_{\alpha}M_{\beta}N$, which is an example of the compound containing a nitrogen element and the element M, as a raw material, makes it possible to suppress the release of the nitrogen element to the outside of the system in the process of producing the sulfide solid electrolyte. The first-principles calculation can be used to select the element L and the element M from which such an effect is obtained. Hereinafter, a method for selecting the raw material compound $L_{\alpha}M_{\beta}N$ will be described.

In the present embodiment, the raw material compound is selected by the procedures listed in (1) to (3).

(1) Sorted is a candidate material containing nitrogen, an element L', and an element M', in which the first neighbor atoms of the element L' and the element M' are nitrogen.
(2) The defect generation energy $E_{Ndefect}$ for nitrogen inside the candidate material is calculated by using the first-principles calculation.
(3) When the $E_{Ndefect}$ is 4.00 eV or more, the candidate material is selected as the raw material compound.

The defect generation energy $E_{Ndefect}$ for nitrogen refers to the value of energy required for extracting the nitrogen atom from the crystal structure to generate a defect.

The defect generation energy for nitrogen refers to a value calculated with the use of the total energy $E_{perfect}$ of a crystal structure including no defect, the total energy $E_{Nvacancy}$ of the crystal structure including a nitrogen defect, and the chemical potential $\mu_N$ of the nitrogen atom, which is defined by the following formula 2.

$$E_{Ndefect} = (E_{Nvacancy} + \mu_N) - E_{perfect} \ldots 2$$

More specifically, the procedure for calculating the defect generation energy $E_{Ndefect}$ for nitrogen is as follows.

(a) Obtaining the composition and crystal structure of candidate material.
(b) Calculating the chemical potential $\mu_N$ of the nitrogen atom to be extracted as a defect.
(c) Calculating the total energy $E_{perfect}$ of the crystal structure including no defect by structure optimization calculation.
(d) Calculating the total energy $E_{Nvacancy}$ of the crystal structure including a nitrogen defect by structure optimization calculation.
(e) Calculating the defect generation energy $E_{Ndefect}$ for nitrogen in accordance with the formula 2.

When the crystal structure of the candidate material has therein multiple nitrogen-occupied sites, $E_{Ndefect}$ is calculated for each of the nitrogen-occupied sites, and the energy with the lowest value is used as $E_{Ndefect}$ of the candidate material.

The composition and crystal structure of the candidate material can be arbitrarily selected from those available from known publications, databases, and the like. The candidate material is not particularly limited as long as the material is a compound containing a nitrogen element, the element L', and the element M', but is preferably a compound that is stable under normal temperature and normal pressure.

In the present embodiment, the element L' is a metal element. The element M' is an element that belongs to any one of Groups 2 to 15 of the periodic table, other than nitrogen, and is an element that is different from the element L'. N is a nitrogen element.

The element L' is not particularly limited, but is preferably any of an alkali metal element, an alkaline earth metal element, and an aluminum element, more preferably at least one element selected from lithium, sodium, potassium, magnesium, calcium, and aluminum, still more preferably lithium element. This makes it easy to operate an energy storage device with the solid electrolyte applied thereto.

In the present embodiment, the defect generation energy for nitrogen is calculated for the candidate material represented by $Li_\alpha M'_\beta N$ (a and $\beta$ are numerical values that give a stoichiometric ratio depending on the type of the element M) and $Li_3N$. More specifically, a lithium element is selected as the element L'. Each element of boron, magnesium, aluminum, silicon, phosphorus, calcium, strontium, titanium, vanadium, chromium, manganese, iron, cobalt, nickel, zinc, gallium, germanium, strontium, yttrium, zirconium, niobium, indium, tin, cerium, hafnium, tantalum, and carbon is evaluated as the element M'.

For the first-principles calculation, calculation software of Vienna Ab-initio Simulation Package (VASP) can be used. The calculation conditions are as follows. The k point is set such that the k-resolution value is $1000 \pm 200$. The k-resolution is the product of the number of atoms in a model and the k points in a, b, and c-axis directions. When a substance to be subjected to the calculation contains a transition metal element (where the 3d orbitals are not closed shells in the state of a cation with a valence considered stable, with electrons in the 3d orbitals), the value of Hubbard Ueff is set. For the value of Hubbard Uelf, a value that is registered in the crystalline structure database "Materials Project" (https://materialsproject.org/#search/materials) is used. Table 4 shows the Ueff values of vanadium, chromium, manganese, iron, cobalt, and nickel.

Cut-off energy of plane wave basis function: 520 eV
Approximation of exchange-correlation interaction: GGA + U
Pseudopotential: PAW (PBEsol)
k point: k-resolution = $1000 \pm 200$
Convergence condition for SCF calculation: $10^{-4}$ eV
Occupancy of each atomic site (Occ.): 1

[Table 4]

| Element | Ueff / eV |
|---------|-----------|
| V | 3.25 |

(continued)

| Element | Ueff / eV |
|---|---|
| Cr | 3.70 |
| Mn | 3.90 |
| Fe | 5.30 |
| Co | 3.32 |
| Ni | 6.20 |

In the procedure (d), for reducing the interaction between nitrogen defects, the calculation model cell is designed such that lattice constants a, b, and c are all approximately 10 Å to the extent that the total number of atoms is not more than 200. Table 5 shows lattice constants for use in the calculation of some candidate materials.

[Table 5]

| Composition | Number of atom / - | a / Å | b / Å | c / Å | $\alpha$ / deg. | $\beta$ / deg. | $\gamma$ / deg. | Volume / Å$^3$ |
|---|---|---|---|---|---|---|---|---|
| $Li_3N$ | 108 | 10.8 | 10.8 | 11.5 | 90.0 | 90.0 | 120.0 | 1168.6 |
| $Li_{3/2}Al_{1/2}N$ | 192 | 8.20 | 16.3 | 16.3 | 109.5 | 109.5 | 109.5 | 1680.7 |
| $Li_{3/2}B_{1/2}N$ | 96 | 10.2 | 7.00 | 13.4 | 90.0 | 112.9 | 90.0 | 885.1 |

Table 6 shows the element M', and the chemical composition and defect generation energy $E_{Ndefect}$ for nitrogen for each candidate material.

[Table 6]

| System | Composition | Defect element | $E_{Ndefect}$ / eV |
|---|---|---|---|
| - | $Li_3N$ | N | 2.94 |
| B | $Li_{3/2}B_{1/2}N$ | N | 4.35 |
| C | $LiC_{1/2}N$ | N | 4.12 |
| Mg | $LiMgN$ | N | 4.38 |
| Al | $Li_{3/2}Al_{1/2}N$ | N | 5.36 |
| Si | $Li_{5/3}Si_{1/3}N$ | N | 4.48 |
| P | $Li_{7/4}P_{1/4}N$ | N | 4.11 |
| Ca | $LiCaN$ | N | 3.28 |
| Sc | $Li_{3/2}Sc_{1/2}N$ | N | 4.48 |
| Ti | $Li_{5/3}Ti_{1/3}N$ | N | 4.00 |
| V | $Li_{7/4}V_{1/4}N$ | N | 3.88 |
| Cr | $Li_{3/2}Cr_{1/4}N$ | N | 2.32 |
| Mn | $Li_{7/4}Mn_{1/4}N$ | N | 2.23 |
| Fe | $Li_{3/2}Fe_{1/2}N$ | N | -4.45 |
| Co | $Li_{3/2}Co_{1/2}N$ | N | 1.17 |
| Ni | $Li_{5/3}NiN$ | N | -4.05 |
| Zn | $LiZnN$ | N | 2.86 |
| Ga | $Li_{3/2}Ga_{1/2}N$ | N | 3.35 |
| Ge | $Li_{5/3}Ge_{1/3}N$ | N | 2.72 |
| Sr | $LiSrN$ | N | 2.16 |

(continued)

| System | Composition | Defect element | $E_{Ndefect}$ / eV |
|---|---|---|---|
| Y | $Li_{3/2}Y_{1/2}N$ | N | 3.75 |
| Zr | $LiZr_{1/2}N$ | N | 4.07 |
| Nb | $Li_{7/4}Nb_{1/4}N$ | N | 4.37 |
| In | $Li_{3/2}In_{1/2}N$ | N | 1.64 |
| Sn | $LiSn_{1/2}N$ | N | 3.00 |
| Ce | $LiCe_{1/2}N$ | N | 3.12 |
| Hf | $LiHf_{1/2}N$ | N | 4.33 |
| Ta | $Li_{7/4}Ta_{1/4}N$ | N | 4.69 |

From Table 6, it is found that the defect generation energy $E_{Ndefect}$ for nitrogen in $Li_3N$, in which nitrogen defects are likely to be generated, is 2.94 eV In addition, it is found that each element of vanadium, yttrium, gallium, calcium, cerium, tin, zinc, germanium, chromium, manganese, strontium, indium, cobalt, nickel, and iron has defect generation energy $E_{Ndefect}$ for nitrogen in $Li_\alpha M'_\beta N$, which is as low as 3.88 eV or less. Thus, the candidate materials containing any element of vanadium, yttrium, gallium, calcium, cerium, tin, zinc, germanium, chromium, manganese, strontium, indium, cobalt, nickel, and iron as the element M' are predicted to be likely to generate nitrogen defects, and less effective in suppressing the discharge of the nitrogen element to the outside of the system in the process of producing the sulfide solid electrolyte.

In contrast, it is found that each element of aluminum, tantalum, silicon, scandium, magnesium, niobium, boron, hafnium, carbon, zirconium, and titanium has defect generation energy $E_{Ndefect}$ for nitrogen in $Li_\alpha M'_\beta N$, which is as high as 4.00 eV or more. Accordingly, the candidate materials containing any element of aluminum, tantalum, silicon, scandium, magnesium, niobium, boron, hafnium, carbon, zirconium, and titanium as the element M' are predicted to be unlikely to generate nitrogen defects, and be likely to produce the effect of suppressing the discharge of the nitrogen element to the outside of the system in the process of producing the sulfide solid electrolyte.

The candidate material is predicted to be, as the value of the defect generation energy $E_{Ndefect}$ for nitrogen is increased, less likely to generate a nitrogen defect, and capable of further suppressing the discharge of the nitrogen element to the outside of the system in the process of producing the sulfide solid electrolyte. For this reason, in the present embodiment, the defect generation energy $E_{Ndefect}$ for nitrogen of the candidate material is 4.00 eV or more, preferably 4.10 eV or more, more preferably 4.20 eV or more, still more preferably 4.30 eV or more, particularly preferably 4.35 eV or more.

In the present embodiment, as an example, the calculation is performed for the case of containing a lithium element as the element L'. More specifically, the first-principles calculation is performed with $Li_\alpha M'_\beta N$ as a model. The element L' is not particularly limited as long as the element is a metal element, and for example, a candidate material containing any of sodium, potassium, magnesium, calcium, and aluminum may be selected as the element L', and the raw material compound may be selected by using the first-principles calculation.

<Energy Storage Device>

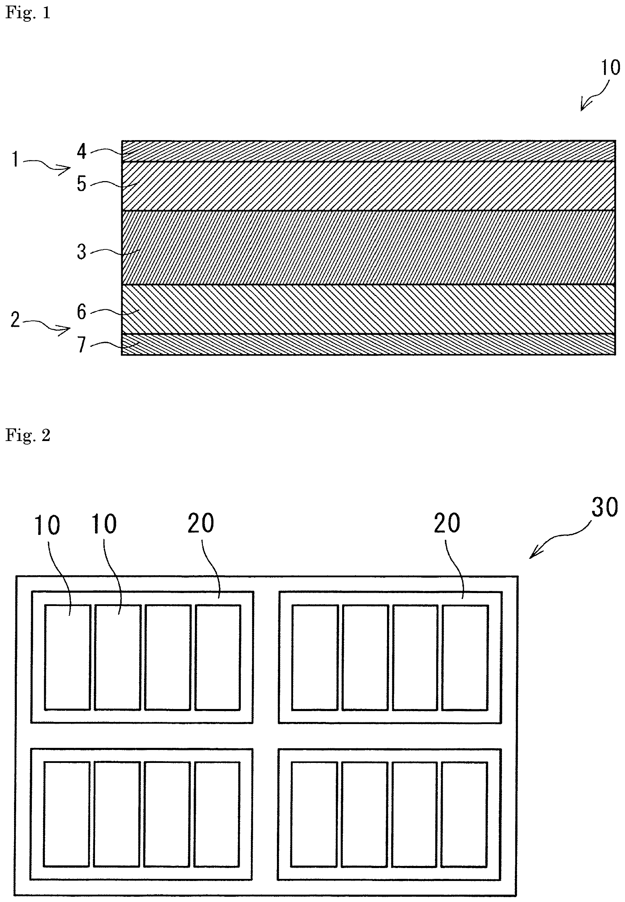

Hereinafter, as an embodiment of the energy storage device according to the present invention, an all-solid-state battery will be described as a specific example. An energy storage device 10 shown in Fig. 1, which is an all-solid-state battery, and is a secondary battery that has a positive electrode layer 1 and a negative electrode layer 2 disposed with an isolation layer 3 interposed therebetween. The positive electrode layer 1 includes a positive substrate 4 and a positive active material layer 5, and the positive substrate 4 serves as the outermost layer of the positive electrode layer 1. The negative electrode layer 2 includes a negative substrate 7 and a negative active material layer 6, and the negative substrate 7 serves as the outermost layer of the negative electrode layer 2. In the energy storage device 10 shown in Fig. 1, the negative active material layer 6, an isolation layer 3, the positive active material layer 5, and the positive substrate 4 are stacked in this order on the negative substrate 7.

The energy storage device 10 contains the sulfide solid electrolyte according to an embodiment of the present invention in at least one of the positive electrode layer 1, the negative electrode layer 2, and the isolation layer 3. More specifically, the sulfide solid electrolyte according to one embodiment of the present invention is contained in at least one of the positive active material layer 5, the negative active material layer 6, and the isolation layer 3. The energy storage device 10 contains the sulfide solid electrolyte with a high recovery rate, thus the ionic conductivity of the sulfide solid electrolyte is sufficiently recovered by drying again, for example, even when the sulfide solid electrolyte is left in an air atmosphere during the manufacturing process or the like, and the energy storage device 10 can be achieve favorable charge-discharge performance.

For the energy storage device 10, another solid electrolyte other than the sulfide solid electrolyte according to an embodiment of the present invention may be also used together. Examples of the other solid electrolyte include a sulfide solid electrolyte other than the sulfide solid electrolyte according to an embodiment of the present invention, an oxide solid electrolyte, a fluoride solid electrolyte, a dry polymer electrolyte, a gel polymer electrolyte, and a pseudo solid electrolyte, and the sulfide solid electrolyte is preferable. In addition, one layer in the energy storage device 10 may contain therein multiple different types of solid electrolytes, or the energy storage device 10 may contain therein different solid electrolytes for each of the layers.

Examples of the sulfide solid electrolyte other than the sulfide solid electrolyte according to an embodiment of the present invention include $Li_2S-P_2S_5$, $Li_2S-P_2S_5-LiI$, $Li_2S-P_2S_5-LiCl$, $Li_2S-P_2S_5-LiBr$, $Li_2S-P_2S_5-Li_2O$, $Li_2S-P_2S_5-Li_2O-LiI$, $Li_2S-P_2S_5-Li_3N$, $Li_2SSiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_{2n}$ (provided that m and n are positive numbers, and Z is any of Ge, Zn, and Ga), $Li_2S-GeS_2$, $Li_2S-SiS_2-Li_3PO_4$, $Li_2S-SiS_2-Li_xMO_y$ (provided that x and y are positive numbers, and M is any of P, Si, Ge, B, Al, Ga, and In), and $Li_{10}GeP_2S_{12}$.

[Positive Electrode Layer]

The positive electrode layer 1 includes the positive substrate 4, and the positive active material layer 5 stacked on the surface of the positive substrate 4. The positive electrode layer 1 may include an intermediate layer between the positive substrate 4 and the positive active material layer 5.

(Positive Substrate)

The positive substrate 4 has conductivity. Whether the positive substrate has "conductivity" or not is determined with the volume resistivity of $10^7$ $\Omega$ cm measured in accordance with JIS H-0505 (1975) as a threshold. As the material of the positive substrate 4, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate 4 include a foil, a deposited film, a mesh, and a porous material, and a foil is preferable from the viewpoint of cost. Accordingly, the positive substrate 4 is preferably an aluminum foil or an aluminum alloy foil. Examples of the aluminum or aluminum alloy include A1085, A3003, and AlN30 specified in JIS-H-4000 (2014) or JIS-H-4160 (2006).

The average thickness of the positive substrate 4 is preferably 3 $\mu$m or more and 50 $\mu$m or less, more preferably 5 $\mu$m or more and 40 $\mu$m or less, still more preferably 8 $\mu$m or more and 30 $\mu$m or less, particularly preferably 10 $\mu$m or more and 25 $\mu$m or less. The average thickness of the positive substrate 4 falls within the range mentioned above, thereby making it possible to increase the energy density per volume of the energy storage device 10 while increasing the strength of the positive substrate 4. The term "average thicknesses" of the positive substrate 4 and of the negative substrate 7 described later each refer to a value obtained by dividing the mass of the substrate with a predetermined area by the true density and area of the substrate.

The intermediate layer is a layer disposed between the positive substrate 4 and the positive active material layer 5. The intermediate layer includes a conductive agent such as carbon particles, thereby reducing contact resistance between the positive substrate 4 and the positive active material layer 5. The configuration of the intermediate layer is not particularly limited, and includes, for example, a binder and a conductive agent.

(Positive Active Material Layer)

The positive active material layer 5 includes a positive active material. The positive active material layer 5 can be formed from a so-called positive composite including a positive active material. The positive active material layer 5 may contain a mixture or composite including a positive active material and a solid electrolyte and the like. The positive active material layer 5 contains optional components such as a conductive agent, a binder (binding agent), a thickener, and a filler, if necessary. One of, or two or more of these optional components may substantially fail to be contained in the positive active material layer 5.

The positive active material can be appropriately selected from known positive active materials. As the positive active material for a lithium ion secondary battery, a material capable of occluding and releasing lithium ions is typically used. Examples of the positive active material include lithium-transition metal composite oxides that have an $\alpha$-$NaFeO_2$-type crystal structure, lithium-transition metal composite oxides that have a spinel-type crystal structure, polyanion compounds, chalcogenides, and sulfur. Examples of the lithium-transition metal composite oxides that have an

$\alpha$-NaFeO$_2$-type crystal structure include Li[Li$_x$Ni$_{(1-x)}$]O$_2$ ($0 \le x < 0.5$), Li[Li$_x$Ni$_\gamma$Co$_{(1-x-\gamma)}$]O$_2$ ($0 \le x < 0.5$, $0 < \gamma < 1$), Li[Li$_x$Co$_{(1-x)}$]O$_2$ ($0 \le x < 0.5$), Li[Li$_x$Ni$_\gamma$Mn$_{(1-x-\gamma)}$]O$_2$ ($0 \le x < 0.5$, $0 < \gamma < 1$), Li[Li$_x$Ni$_\gamma$MneCo$_{(1-x-\gamma-\beta)}$]O$_2$ ($0 \le x < 0.5$, $0 < \gamma$, $0 < \beta$, $0.5 < \gamma + \beta < 1$), and Li[Li$_x$Ni$_\gamma$Co$_\beta$Al$_{(1-x-\gamma-\beta)}$]O$_2$ ($0 \le x < 0.5$, $0 < \gamma$, $0 < \beta$, $0.5 < \gamma + \beta < 1$). Examples of the lithium-transition metal composite oxides that have a spinel-type crystal structure include Li$_x$Mn$_2$O$_4$ and Li$_x$Ni$_\gamma$Mn$_{(2-\gamma)}$O$_4$. Examples of the poly-anion compounds include LiFePO4, LiMnP04, LiNiP04, LiCoP04, Li$_3$V$_2$(PO$_4$)$_3$, Li$_2$MnSiO$_4$, and Li$_2$CoPO$_4$F. Examples of the chalcogenides include titanium disulfide, molybdenum disulfide, and molybdenum dioxide. Some of atoms or polyanions in these materials may be substituted with atoms or anion species composed of other elements. The surfaces of these materials may be coated with other materials. In the positive active material layer 5, one of these materials may be used alone, or two or more thereof may be used in mixture.

The positive active material is typically particles (powder). The average particle size of the positive active material is preferably 0.1 $\mu$m or more and 20 $\mu$m or less, for example. By setting the average particle size of the positive active material to be equal to or more than the lower limit mentioned above, the positive active material is easily manufactured or handled. By setting the average particle size of the positive active material to be equal to or less than the upper limit mentioned above, the electron conductivity of the positive active material layer 5 is improved. It is to be noted that in the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) accounts for 50%, based on a particle size distribution measured by a laser diffraction/scattering method for a diluted solution obtained by diluting particles with a solvent in accordance with JIS-Z-8825 (2013).

A crusher, a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The content of the positive active material in the positive active material layer 5 is preferably 10% by mass or more and 95% by mass or less, and this lower limit is more preferably 30% by mass, still more preferably 50% by mass or more. The content of the positive active material falls within the range mentioned above, thereby allowing the electric capacity of the energy storage device 10 to be further increased.

When the positive active material layer 5 contains a solid electrolyte, the content of the solid electrolyte is preferably 5% by mass or more and 90% by mass or less, more preferably 20% by mass or more and 70 % by mass or less, and this upper limit may be still more preferably 50% by mass. The content of the solid electrolyte falls within the range mentioned above, thereby allowing the electric capacity of the energy storage device 10 to be further increased. In the case of using the sulfide solid electrolyte according to an embodiment of the present invention for the positive active material layer 5, the content of the sulfide solid electrolyte according to an embodiment of the present invention with respect to the all-solid-state electrolyte in the positive active material layer 5 is preferably 50% by mass or more, more preferably 70% by mass or more, still more preferably 90% by mass or more, even more preferably substantially 100% by mass.

The mixture of the positive active material and the solid electrolyte and the like is a mixture prepared by mixing the positive active material, the solid electrolyte, and the like by mechanical milling or the like. For example, the mixture of the positive active material and the solid electrolyte and the like can be obtained by mixing a particulate positive active material, a particulate solid electrolyte, and the like. Examples of the composite of the positive active material and the solid electrolyte and the like include a composite that has a chemical or physical bond between the positive active material and the solid electrolyte and the like, and a composite obtained by mechanically combining the positive active material and the solid electrolyte and the like. The composite has, in one particle thereof, the positive active material and the solid electrolyte and the like, and examples of the composite include a composite in which the positive active material and the solid electrolyte and the like form an aggregated state, and a composite in which a film containing the solid electrolyte and the like is formed on at least a part of the surface of the positive active material.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. In addition, these materials may be used in combination. For example, a material carbon black combined with a CNT may be used. Among these materials, carbon black is preferable from the viewpoints of electron conductivity and coatability, and in particular, acetylene black is preferable.

The content of the conductive agent in the positive active material layer 5 is preferably 1% by mass or more and 10% by mass or less, more preferably 3% by mass or more and 9% by mass or less. The content of the conductive agent falls within the range mentioned above, thereby allowing the energy density of the energy storage device 10 to be increased.

Examples of the binder mentioned above include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer 5 is preferably 1% by mass or more and 10% by mass or less, more preferably 3% by mass or more and 9% by mass or less. The content of the binder falls within the range mentioned above, thereby allowing the active material to be stably held.

Examples of the thickener include polysaccharide polymers such as a carboxymethylcellulose (CMC) and a methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer 5 may contain a typical nonmetal element such as B, N, P, F, Cl, Br, or 1, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material, the solid electrolyte, the conductive agent, the binder, the thickener, and the filler.

The average thickness of the positive active material layer 5 is preferably 30 $\mu$m or more and 1,000 $\mu$m or less, more preferably 60 $\mu$m or more and 500 $\mu$m or less. By setting the average thickness of the positive active material layer 5 to be equal to or more than the lower limit mentioned above, the energy storage device 10 with a high energy density can be obtained. The average thickness of the positive active material layer 5 is set to be equal to or less than the upper limit mentioned above, thereby allowing, for example, the size of the energy storage device 10 to be reduced. The average thickness of the positive active material layer 5 is regarded as the average value of thicknesses measured at any five points. The same applies to the average thicknesses of the negative active material layer 6 and isolation layer 3 described later.

[Negative Electrode Layer]

The negative electrode layer 2 includes a negative substrate 7 and a negative active material layer 6 disposed directly on the negative substrate 7 or over the negative substrate 7 with an intermediate layer interposed therebetween. The configuration of the intermediate layer is not particularly limited, and can be selected from, for example, the configurations exemplified for the positive electrode layer 1.

(Negative Substrate)

The negative substrate 7 has conductivity. As the material of the negative substrate 7, a metal such as copper, nickel, stainless steel, nickel-plated steel, or aluminum, an alloy thereof, a carbonaceous material, or the like is used. Among these metals and alloys, copper or a copper alloy is preferable. Examples of the negative substrate 7 include a foil, a deposited film, a mesh, and a porous material, and a foil is preferable from the viewpoint of cost. Accordingly, the negative substrate 7 is preferably a copper foil or a copper alloy foil. Examples of the copper foil include a rolled copper foil and an electrolytic copper foil.

The average thickness of the negative substrate 7 is preferably 2 $\mu$m or more and 35 $\mu$m or less, more preferably 3 $\mu$m or more and 30 $\mu$m or less, still more preferably 4 $\mu$m or more and 25 $\mu$m or less, and particularly preferably 5 $\mu$m or more and 20 $\mu$m or less. The average thickness of the negative substrate 7 falls within the range mentioned above, thereby allowing the energy density per volume of the energy storage device 10 to be increased while increasing the strength of the negative substrate 7.

(Negative Active Material Layer)

The negative active material layer 6 includes a negative active material. The negative active material layer 6 can be formed from a so-called negative composite including a negative active material. The negative active material layer 6 may contain a mixture or composite including a negative active material and a solid electrolyte and the like. The negative active material layer 6 includes optional components such as a conductive agent, a binder, a thickener, and a filler, if necessary. The types and suitable contents of the optional components in the negative active material layer 6 are the same as those of the optional components in the positive active material layer 5 described above. One of, or two or more of these optional components may substantially fail to be contained in the negative active material layer 6.

The negative active material layer 6 mentioned above may contain a typical nonmetal element such as B, N, P, F, Cl, Br, or 1, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the solid electrolyte, the conductive agent, the binder, the thickener, and the filler.

The negative active material can be appropriately selected from known negative active materials. As the negative active material for a lithium ion secondary battery, a material capable of absorbing and releasing lithium ions is usually used. Examples of the negative active material include metal Li; metals or metalloids such as Si and Sn; metal oxides or metalloid oxides such as oxides of Si, oxides of Ti, and oxides of Sn; titanium-containing oxides such as $Li_4Ti_5O_{12}$, $LiTiO_2$, and $TiNb_2O_7$; polyphosphoric acid compounds; silicon carbides; and carbon materials such as graphite and non-graphitic carbon (easily graphitizable carbon or hardly graphitizable carbon). Among these materials, graphite and non-graphitic carbon are preferable. In the negative active material layer 6, one of these materials may be used singly, or two or more of these materials may be mixed and used.

The term "graphite" refers to a carbon material in which an average lattice spacing ($d_{002}$) of a (002) plane determined by X-ray diffraction before charge-discharge or in a discharged state is 0.33 nm or more and less than 0.34 nm. Examples of the graphite include natural graphite and artificial graphite. Artificial graphite is preferable from the viewpoint that a material that has stable physical properties can be obtained.

The term "non-graphitic carbon" refers to a carbon material in which the average lattice spacing ($d_{002}$) of the (002) plane determined by X-ray diffraction before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol derived material.

In this regard, the "discharged state" means a state discharged such that lithium ions that can be occluded and released in association with charge-discharge are sufficiently released from the carbon material as the negative active material. For example, the "discharged state" refers to a state where the open circuit voltage is 0.7 V or higher in a unipolar battery that has, for use as a working electrode, a negative electrode containing a carbon material as a negative active material, and has metal Li for use as a counter electrode.

The "hardly graphitizable carbon" refers to a carbon material in which the $d_{002}$ is 0.36 nm or more and 0.42 nm or less.

The "easily graphitizable carbon" refers to a carbon material in which the $d_{002}$ is 0.34 nm or more and less than 0.36 nm.

The negative active material is typically particles (powder). The average particle size of the negative active material can be, for example, 1 nm or more and 100 $\mu$m or less. When the negative active material is a carbon material, a titanium-containing oxide, or a polyphosphoric acid compound, the average particle size thereof may be 1 $\mu$m or more and 100 $\mu$m or less. When the negative active material is Si, Sn, an oxide of Si, an oxide of Sn, or the like, the average particle size thereof may be 1 nm or more and 1 $\mu$m or less. By setting the average particle size of the negative active material to be equal to or greater than the above lower limit, the negative active material is easily produced or handled. By setting the average particle size of the negative active material to be equal to or less than the upper limit, the electron conductivity of the negative active material layer 6 is improved. A crusher, a classifier, or the like is used in order to obtain a powder with a predetermined particle size. The crushing method and the classification method can be selected from, for example, the methods exemplified for the positive electrode layer 1. When the negative active material is a metal such as metal Li, the negative active material may have the form of a foil.

The content of the negative active material in the negative active material layer 6 is preferably 10% by mass or more and 95% by mass or less, and this lower limit is more preferably 30% by mass, still more preferably 50% by mass. The content of the negative active material falls within the range mentioned above, thereby allowing the electric capacity of the energy storage device 10 to be further increased.

When the negative active material layer 6 contains a solid electrolyte, the content of the solid electrolyte is preferably 5% by mass or more and 90% by mass or less, more preferably 20% by mass or more and 70 % by mass or less, and this upper limit may be still more preferably 50% by mass. The content of the solid electrolyte falls within the range mentioned above, thereby allowing the electric capacity of the energy storage device 10 to be further increased. In the case of using the sulfide solid electrolyte according to an embodiment of the present invention for the negative active material layer 6, the content of the sulfide solid electrolyte according to an embodiment of the present invention with respect to the all-solid-state electrolyte in the negative active material layer 6 is preferably 50% by mass or more, more preferably 70% by mass or more, still more preferably 90% by mass or more, even more preferably substantially 100% by mass.

The mixture or composite of the negative active material and the solid electrolyte and the like can be obtained by replacing the positive active material with the negative active material in the above-described mixture or composite of the positive active material and the solid electrolyte and the like.

The average thickness of the negative active material layer 6 is preferably 30 $\mu$m or more and 1,000 $\mu$m or less, more preferably 60 $\mu$m or more and 500 $\mu$m or less. By setting the average thickness of the negative active material layer 6 to be equal to or more than the lower limit mentioned above, the energy storage device 10 with a high energy density can be obtained. The average thickness of the negative active material layer 6 is set to be equal to or less than the upper limit mentioned above, thereby allowing, for example, the size of the energy storage device 10 to be reduced.

[Isolation Layer]

The isolation layer 3 contains a solid electrolyte. As the solid electrolyte contained in the isolation layer 3, various solid electrolytes can be used besides the above-described sulfide solid electrolyte according to an embodiment of the present invention, and in particular, a sulfide solid electrolyte is preferably used. The content of the solid electrolyte in the isolation layer 3 is preferably 70% by mass or more, more preferably 90% by mass or more, still more preferably 99% by mass or more, and may be even more preferably substantially 100% by mass. In the case of using the sulfide solid electrolyte according to an embodiment of the present invention for the isolation layer 3, the content of the sulfide solid electrolyte according to an embodiment of the present invention in the all-solid electrolyte in the isolation layer 3 is preferably 50% by mass or more, more preferably 70% by mass or more, still more preferably 90% by mass or more, even more preferably substantially 100% by mass.

The isolation layer 3 may contain optional components such as a phosphoric acid compound, e.g., $Li_3PO_4$, an oxide, a halogen compound, and a binder, a thickener, and a filler. The optional components such as a binder, a thickener, and a filler can be selected from the materials exemplified for the positive active material layer 5.

The average thickness of the isolation layer 3 is preferably 1 $\mu$m or more and 50 $\mu$m or less, more preferably 3 $\mu$m or more and 20 $\mu$m or less. The average thickness of the isolation layer 3 is set to be equal to or more than the lower limit mentioned above, thereby allowing the positive electrode layer 1 and the negative electrode layer 2 to be highly reliably insulated. The average thickness of the isolation layer 3 is equal to or smaller than the upper limit mentioned above, thereby allowing the energy density of the energy storage device 10 to be increased.

The energy storage device according to the present embodiment can be mounted as an energy storage unit (battery module) configured with a plurality of energy storage devices assembled, on power sources for automobiles such as electric vehicles (EV), hybrid vehicles (HEV), and plug-in hybrid vehicles (PHEV), power sources for electronic devices such as personal computers and communication terminals, and power sources for power storage, or the like. In this case, the technique of the present invention may be applied to at least one energy storage device included in the energy storage unit.

Fig. 2 shows an example of an energy storage apparatus 30 obtained by assembling energy storage units 20 that each have two or more electrically connected energy storage devices 10 assembled. The energy storage apparatus 30 may include a busbar (not shown) that electrically connects two or more energy storage devices 10, a busbar (not shown) that electrically connects two or more energy storage units 20, and the like. The energy storage unit 20 or the energy storage apparatus 30 may include a state monitor (not shown) that monitors the state of one or more energy storage devices.

<Method for Producing Energy Storage Device>

The method for producing an energy storage device according to an embodiment of the present invention can be performed by a commonly known method, except that the sulfide solid electrolyte according to an embodiment of the present invention is used as a part of a solid electrolyte or the entire solid electrolyte for preparing at least one of the positive electrode layer, the isolation layer, and the negative electrode layer. Specifically, the production method includes, for example, (1) providing a positive composite, (2) providing a material for an isolation layer, (3) providing a negative composite, and (4) stacking a positive electrode layer, the isolation layer, and a negative electrode layer. Hereinafter, each of the steps will be described in detail.

(1) Step of preparing positive composite

In this step, a positive composite for forming the positive electrode layer (positive active material layer) is typically prepared. The method for preparing the positive composite is not particularly limited, and can be appropriately selected in accordance with the purpose. Examples thereof include a mechanical milling treatment of a material for the positive composite, compression molding of the positive active material, and sputtering with the use of a target material of for the positive active material. When the positive composite contains the mixture or composite including the positive active material and the solid electrolyte, this step can include mixing the positive active material and the solid electrolyte by using, for example, a mechanical milling method or the like to prepare the mixture or composite of the positive active material and the solid electrolyte.

(2) Step of preparing material for isolation layer

In this step, a material for isolation layer for forming the isolation layer is typically prepared. When the energy storage device is an all-solid-state battery, the material for isolation layer can be a solid electrolyte. The solid electrolyte as the material for isolation layer can be prepared by a conventionally known method. For example, predetermined materials can be subjected to a treatment by a mechanical milling method to obtain the solid electrolyte. The material for isolation layer may be prepared by heating predetermined materials to the melting temperature or higher by a melt quenching method to melt and mix the both materials at a predetermined ratio, and quenching the melted mixture. Examples of other methods for synthesizing the material for isolation layer include a solid phase method of sealing under reduced pressure and then firing, a liquid phase method such as dissolution-precipitation, a gas phase method (PLD), and firing under an argon atmosphere after mechanical milling.

(3) Step of preparing negative composite

In this step, a negative composite for forming the negative electrode layer (negative active material layer) is typically prepared. The specific method for preparing the negative composite is the same as that for the positive composite. When the negative composite contains the mixture or composite including the negative active material and the solid electrolyte, this step can include mixing the negative active material and the solid electrolyte by using, for example, a mechanical milling method or the like to prepare the mixture or composite of the negative active material and the solid electrolyte.

(4) Stacking step

In this step, for example, a positive electrode layer including a positive substrate and a positive active material layer, an isolation layer, and a negative electrode layer including a negative substrate and a negative active material layer are stacked. In this step, the positive electrode layer, the isolation layer, and the negative electrode layer may be sequentially formed in this order, or vice versa, and the order of forming the respective layers is not particularly limited. The positive electrode layer is formed, for example, by pressure-molding a positive substrate and the positive composite, the isolation layer is formed by pressure-molding the material for isolation layer, and the negative electrode layer is formed by pressure-molding a negative substrate and the negative composite. The positive electrode layer, the isolation layer, and the negative electrode layer may be stacked by pressure-molding the positive substrate, the positive composite, the material for isolation layer, the negative composite, and the negative substrate at a time. The positive electrode layer and the negative electrode layer may be each formed in advance, and stacked by pressure-molding together with the isolation layer.

[Other Embodiments]

It is to be noted that the energy storage device according to the present invention is not to be considered limited to the embodiment mentioned above, and various changes may be made without departing from the scope of the present invention. For example, the configuration according to one embodiment can be added to the configuration according to another embodiment, or a part of the configuration according to one embodiment can be replaced with the configuration according to another embodiment or a well-known technique. Furthermore, a part of the configuration according to one embodiment can be deleted. In addition, a well-known technique can be added to the configuration according to one embodiment.

For example, the energy storage device according to the present invention may include other layers besides the positive electrode layer, the isolation layer, and the negative electrode layer. In addition, the energy storage device according to the present invention may include a liquid. Examples of such an energy storage device include an energy storage device in which voids of the positive active material layer 5, the isolation layer 3, the negative active material layer 6, and the like in the above-described energy storage device 10 are filled with a nonaqueous electrolyte solution or the like containing an Ionic liquid or the like. The energy storage device according to the present invention may be a capacitor or the like, in addition to the energy storage device to serve as a secondary battery.

<Examples>

Hereinafter, the present invention will be described in more detail with reference to examples, but the present invention is not to be considered limited to the following examples.

[Example 1]

A sulfide solid electrolyte represented by $75[0.85(0.715Li_2S \cdot 0.27P_2S_5) \cdot 0.15Li_{1.5}Al_{0.5}N] \cdot SCao.sI \cdot 5LiI \cdot 15LiBr(Li_{3.72}Ca_{0.07}PAl_{0.16}S_{3.82}N_{0.33}Br_{0.44}I_{0.29})$ was synthesized by the following treatment.

$Li_3N$ and AlN were weighed so as to reach a molar ratio of 1.2 : 1, mixed in a mortar, and then pelletized. Next, the pellet was subjected to a heat treatment at 750°C for 1 hour to prepare $Li_{1.5}Al_{0.5}N$. The fact that the main phase of the prepared $Li_{1.5}Al_{0.5}N$ was $Li_{1.5}Al_{0.5}N$ was confirmed by X-ray diffraction measurement.

In a glove box in an argon atmosphere with a dew point of -50°C or lower, $Li_2S$ (99.98%, Aldrich), $P_2S_5$ (99% from Aldrich), $Li_{1.5}Al_{0.5}N$, LiBr (99.999% from Aldrich), LiI (99.999% from Aldrich), and $Ca_{0.5}I$ were weighed so as to reach molar ratios of 45.58 : 17.21 : 11.25 : 15.00 : 5.00 : 5.00, and then mixed in a mortar to prepare a composition material containing lithium, calcium, phosphorus, aluminum, sulfur, nitrogen, bromine, and iodine as constituent elements.

The composition material was put into a closed 80 mL zirconia pot containing 160 g of zirconia balls of 4 mm in diameter. The composition was subjected to a mechanical milling treatment for 45 hours at a revolution of 510 rpm by a planetary ball mill (from FRITSCH, model number: Premium line P-7) to obtain an intermediate.

The obtained intermediate was heated (heat-treated) at 190°C for 2 hours to obtain a sulfide solid electrolyte according to Example 1. The heating temperature was set to be around the crystallization temperature within the range of the crystallization temperature ± 50°C. The crystallization temperature was determined by taking out a part of the intermediate subjected to mechanical milling treatment and applying a DSC measurement to the part. The DSC measurement was performed under the following conditions. More specifically, the temperature was raised from room temperature to 400°C at 10°C/min with the use of a DSC apparatus (Thermo Plus DSC8230 from Rigaku Corporation) and a hermetically sealed pan made of SUS.

[Examples 2 to 11, Comparative Examples 1 to 3]

Respective sulfide solid electrolytes according to Examples 2 to 11 and Comparative Examples 1 to 3 were obtained similarly to Example 1, except for the compositions of and heating temperatures (HT) for the sulfide solid electrolytes as shown in Table 7. Each of the heating temperature is a temperature within the range of the crystallization temperature ± 50°C, determined similarly to Example 1.

$Li_{1.5}B_{0.5}N$ was prepared by the following procedure. $Li_3N$ and BN were weighed so as to have a molar ratio of 1.1 : 1, mixed in a mortar, and then pelletized. Next, the pellet was subjected to a heat treatment at 800°C for 10 minutes to prepare $Li_{1.5}B_{0.5}N$. The fact that the main phase of the prepared $Li_{1.5}B_{0.5}N$ was $Li_{1.5}B_{0.5}N$ was confirmed by X-ray diffraction measurement.

[Examples 12 to 18]

Respective sulfide solid electrolytes according to Examples 12 to 18 were obtained similarly to Example 3, except for the heating temperatures (HT) for the sulfide solid electrolytes as shown in Table 8.

[Evaluation]

(1) Powder X-ray Diffraction Measurement

Powder X-ray diffraction measurement was performed by the method mentioned above for each of the sulfide solid electrolytes according to Examples 1 to 18 and Comparative Examples 1 to 3. Further, trade name "general-purpose atmosphere separator" from Rigaku Corporation was used for an airtight sample holder for X-ray diffraction measurement. In the X-ray diffraction diagrams of the respective sulfide solid electrolytes according to Examples 1 to 18, it has been successfully confirmed that all of the sulfide solid electrolytes have diffraction peaks in the range of $2\theta = 19.9° \pm 0.5°$ and the range of $2\theta = 29.3° \pm 0.5°$, both derived from the HICP, and have a crystal structure.

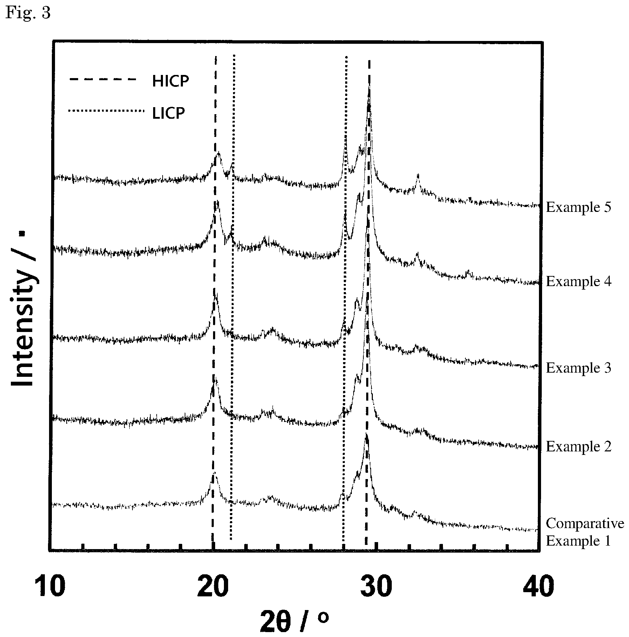

Fig. 3 shows X-ray diffraction diagrams of the respective sulfide solid electrolytes according to Examples 2 to 5 and Comparative Example 1. Diffraction peaks can be confirmed in the range of $2\theta = 19.9° \pm 0.5°$ and the range of $2\theta = 29.3° \pm 0.5°$ derived from the HICP.

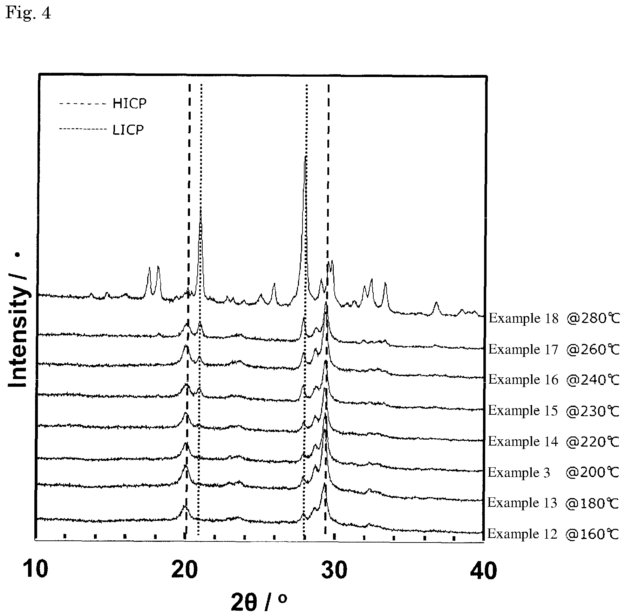

Fig. 4 shows X-ray diffraction diagrams of the respective sulfide solid electrolytes according to Examples 3 and 12 to 18. Diffraction peaks can be confirmed in the range of $2\theta = 19.9° \pm 0.5°$ and the range of $2\theta = 29.3° \pm 0.5°$ derived

from the HICP. In addition, it can be confirmed that the diffraction peak intensity at $2\theta = 21.0\,°\pm 0.5\,°$ derived from an LICP is increased as the heating temperature is increased.

(2) Ionic Conductivity

The ionic conductivity of each of the sulfide solid electrolytes of Examples 1 to 18 and Comparative Examples 1 to 3 at 25°C ($\sigma_{25a}$) was determined by measuring an alternating-current impedance by the above-described method with the use of "VMP-300" from Bio-Logic Science Instruments. The measurement results are presented in Tables 7 and 8.

(3) Evaluation of Recovery Rate of Ionic Conductivity

For each of the sulfide solid electrolytes according to Examples 1 to 11 and Comparative Examples 1 to 3, the recovery rate of the ionic conductivity was evaluated by the following procedures. For each of the sulfide solid electrolytes, the ionic conductivity at 25°C ($\sigma_{25a}$) in accordance with (2) mentioned above was measured, and then, each of the solid electrolytes was left to stand in a dry air atmosphere with a dew point of - 35°C for 6 hours. Thereafter, each of the sulfide solid electrolytes was dried again at 150°C for 1 hour, and the ionic conductivity at 25°C ($\sigma_{25b}$) for each of the solid electrolytes dried again was measured similarly to (2) mentioned above. The measurement results are shown in Tables 7.

Table 7 shows the ratio (recovery rate: $\sigma_{25b}/\sigma_{25a}$) of the ionic conductivity ($\sigma_{25b}$) after being dried again after being left in the dry air atmosphere to the ionic conductivity ($\sigma_{25a}$) before being left in the dry air atmosphere.

[Table 7]

| | | Composition formula | Divalent element A | HT1°C | $\sigma_{25a}$ /mS cm$^{-1}$ | $\sigma_{25b}$ /mS cm$^{-1}$ | $\sigma_{25b}/\sigma_{25a}$ /% |
|---|---|---|---|---|---|---|---|
| | Comparative Example 1 | $75[0.85(0.715Li_2S\cdot0.27P_2S_5)\cdot0.15Li_{1.5}Al_{0.5}N]$ $\cdot10LiI\cdot15LiBr$ ($Li_{3.86}PAl_{0.16}S_{3.82}N_{0.33}Br_{0.44}I_{0.29}$) | - | 190 | 4.04 | 3.36 | 83 |
| | Comparative Example 2 | $75[0.85(0.715Li_2S\cdot0.27P_2S_5)\cdot0.15Li_{1.5}Al_{0.5}N]$ $\cdot5Mg_{0.5}I\cdot5LiI\cdot15LiBr$ ($Li_{3.72}Mg_{0.07}PAl_{0.16}S_{3.82}N_{0.33}Br_{0.44}I_{0.29}$) | Mg | 200 | 3.78 | 2.98 | 79 |
| | Comparative Example 3 | $85(0.75Li_2S\cdot0.25P_2S_5)\cdot5Zn_{0.5}I\cdot10LiI$ ($Li_{3.24}Zn_{0.06}PS_4I_{0.35}$) | Zn | 175 | 2.24 | 1.59 | 71 |
| | Example 1 | $75[0.85(0.715Li_2S\cdot0.27P_2S_5)\cdot0.15Li_{1.5}Al_{0.5}N]$ $\cdot5Ca_{0.5}I\cdot5LiI- 15LiBr$ ($Li_{3.72}Ca_{0.07}PAl_{0.16}S_{3.82}N_{0.33}Br_{0.44}I_{0.29}$) | Ca | 190 | 2.97 | 2.60 | 88 |
| | Example 2 | $75[0.85(0.715Li_2S\cdot0.27P_2S_5)\cdot0.15Li_{1.5}Al_{0.5}N]$ $\cdot3Zn_{0.5}I\cdot7LiI\cdot15LiBr$ ($Li_{3.78}Zn_{0.04}PAl_{0.16}S_{3.82}N_{0.33}Br_{0.44}I_{0.29}$) | Zn | 200 | 5.31 | 4.79 | 90 |
| | Example 3 | $75[0.85(0.715Li_2S\cdot0.27P_2S_5)\cdot0.15Li_{1.5}Al_{0.5}N]$ $\cdot5Zn_{0.5}I\cdot5LiI\cdot15LiBr$ ($Li_{3.72}Zn_{0.07}PAl_{0.16}S_{3.82}N_{0.33}Br_{0.44}I_{0.29}$) | Zn | 200 | 5.09 | 4.41 | 87 |
| | Example 4 | $75[0.85(0.715Li_2S\cdot0.27P_2S_5)\cdot0.15Li_{1.5}Al_{0.5}N]$ $\cdot7Zn_{0.5}I\cdot3LiI\cdot15LiBr$ ($Li_{3.66}Zn_{0.10}PAl_{0.16}S_{3.82}N_{0.33}Br_{0.44}I_{0.29}$) | Zn | 200 | 4.96 | 4.54 | 92 |
| | Example 5 | $75(0.85(0.715Li_2S\cdot0.27P_2S_5)\cdot0.15L_{1.5}Al_{0.5}N)$ $\cdot10Zn_{0.5}I\cdot15LiBr$ ($Li_{3.57}Zn_{0.15}PAl_{0.16}S_{3.82}N_{0.33}Br_{0.44}I_{0.29}$) | Zn | 200 | 3.00 | 2.76 | 92 |
| | Example 6 | $75(0.85(0.715Li_2S\cdot0.27P_2S_5)\cdot0.15Li_{1.5}Al_{0.5}N)$ $\cdot5Mn_{0.5}I\cdot5LiI\cdot15LiBr$ ($Li_{3.72}Mn_{0.07}PAl_{0.16}S_{3.82}N_{0.33}Br_{0.44}I_{0.29}$) | Mn | 195 | 3.93 | 3.33 | 85 |

(continued)

| | Composition formula | Divalent element A | HT 1°C | $\sigma_{25a}$ /mS cm$^{-1}$ | $\sigma_{25b}$ /mS cm$^{-1}$ | $\sigma_{25b}/\sigma_{25a}$ /% |
|---|---|---|---|---|---|---|
| Example 7 | $80[0.80(0.70Li_2S \cdot 0.30P_2S_5) \cdot 0.20Li_{1.5}Al_{0.5}N]$ $\cdot 4Zn_{0.5}I \cdot 4LiI \cdot 12LiBr$ $(Li_{3.38}Zn_{0.05}PAl_{0.21}S_{3.67}N_{0.42}Br_{0.31}I_{0.21})$ | Zn | 220 | 4.37 | 3.80 | 87 |
| Example 8 | $75[0.85(0.715Li_2S \cdot 0.27P_2S_5) \cdot 0.15Li_{1.5}B_{0.5}N]$ $\cdot 3Zn_{0.5}I \cdot 7LiI \cdot 15LiBr$ $(Li_{3.78}Zn_{0.04}PB_{0.16}S_{3.82}N_{0.33}Br_{0.44}I_{0.29})$ | Zn | 220 | 4.80 | 4.52 | 94 |
| Example 9 | $75[0.85(0.715Li_2S \cdot 0.27P_2S_5) \cdot 0.15L_{1.5}B_{0.5}N]$ $\cdot 5Zn_{0.5}I \cdot 5LiI \cdot 15LiBr$ $(Li_{3.72}Zn_{0.07}PB_{0.16}S_{3.82}N_{0.33}Br_{0.44}I_{0.29})$ | Zn | 220 | 4.53 | 3.88 | 86 |
| Example 10 | $80[0.85(0.715Li_2S \cdot 0.27P_2S_5) \cdot 0.15L_{i.5}Al_{0.5}N]$ $\cdot 4Zn_{0.5}I \cdot 4LiI \cdot 12LiBr$ $(Li_{3.57}Zn_{0.05}PAl_{0.16}S_{3.82}N_{0.33}Br_{0.33}I_{0.22})$ | Zn | 230 | 4.87 | 4.37 | 90 |
| Example 11 | $80[0.85(0.715Li_2S \cdot 0.27P_2S_5) \cdot 0.15Li_{1.5}B_{0.5}N]$ $\cdot 4Zn_{0.5}I \cdot 4LiI \cdot 12LiBr$ $(Li_{3.57}Zn_{0.05}PB_{0.16}S_{3.82}N_{0.33}Br_{0.33}I_{0.22})$ | Zn | 230 | 4.26 | 4.09 | 96 |

[Table 8]

| | Composition formula | HT /°C | $\sigma_{25a}$ /mS cm$^{-1}$ |
|---|---|---|---|
| Example 12 | | 160 | 2.5 |
| Example 13 | | 180 | 3.9 |
| Example 3 | | 200 | 5.1 |
| Example 14 | $75[0.85(0.715Li_2S \cdot 0.27P_2S_5) \cdot 0.15Li_{1.5}Al_{0.5}N] \cdot 5Zn_{0.5}I \cdot 5LiI \cdot 15LiBr$ $(Li_{3.72}Zn_{0.07}PAl_{0.16}S_{3.82}N_{0.33}Br_{0.44}I_{0.29})$ | 220 | 5.1 |
| Example 15 | | 230 | 5.8 |
| Example 16 | | 240 | 5.2 |
| Example 17 | | 260 | 1.2 |
| Example 18 | | 280 | 0.4 |

As shown in Table 7, the respective sulfide solid electrolytes according to Examples 1 to 11 are high in recovery rate ($\sigma_{25b}/\sigma_{25a}$) of ionic conductivity after being left in the dry air atmosphere and then dried again. Further, as shown in Table 3, the hydration energy of $Ca_{0.5}I$ composed of Ca and I contained in the sulfide solid electrolytes according to Example 1 is 9.3 meV/atom, the hydration energy of $Zn_{0.5}I$ composed of Zn and I contained in each of the sulfide solid electrolytes according to Examples 2 to 5 and Examples 7 to 11 is 88.8 meV/atom, and the hydration energy of $Mn_{0.5}I$ composed of Mn and I contained in the sulfide solid electrolyte according to Example 6 is 34.1 meV/atom, which are all higher than the hydration energy of LiI (-11.5 meV/atom). Furthermore, the recovery rate ($\sigma_{25b}/\sigma_{25a}$) for each of the sulfide solid electrolytes according to Examples 1 to 11 is higher than the recovery rate ($\sigma_{25b}/\sigma_{25a}$) in the sulfide solid electrolyte according to Comparative Example 1. In contrast, the hydration energy of $Mg_{0.5}I$ composed of Mg and I contained in the sulfide solid electrolyte according to Comparative Example 2 is -17.2 meV/atom, and the hydration energy of $Mg_{0.5}Br$ composed of Mg and Br is -13.8 meV/atom, both of which are lower than the hydration energy of LiI. Furthermore, the recovery rate ($\sigma_{25b}/\sigma_{25a}$) of the sulfide solid electrolyte according to Comparative Example 2 is lower than the recovery rate ($\sigma_{25b}/\sigma_{25a}$) of the sulfide solid electrolyte according to Comparative Example 1. As described above, it can be confirmed that the magnitude of the hydration energy of the compound $A_{0.5}X$ formed by combining the divalent element A and halogen element X contained in the sulfide solid electrolyte affects the recovery rate ($\sigma_{25b}/\sigma_{25a}$). Furthermore, the sulfide solid electrolyte according to Comparative Example 3 contains Zn and I similarly to the sulfide solid electrolyte according to Example 2, but contains no N and has a low recovery rate ($\sigma_{25b}/\sigma_{25a}$). It can be confirmed that the recovery rate ($\sigma_{25b}/\sigma_{25a}$) for each of the sulfide solid electrolytes according to Examples 1 to 7 is increased by containing the specific divalent element A, the halogen element X, and a nitrogen element.

From comparison among Examples 1, 3, 6, and 9 in Table 7, it is found that the sulfide solid electrolyte containing zinc as the divalent element A is particularly high in ionic conductivity ($\sigma_{25a}$) before being left in the air atmosphere.

As shown in Table 8, it is found that the ionic conductivity ($\sigma_{25a}$) before being left in the air atmosphere can be further increased by adjusting the heating temperature (HT).

INDUSTRIAL APPLICABILITY

The sulfide solid electrolyte according to the present invention is suitably used as a solid electrolyte for an energy storage device such as an all-solid-state battery.

DESCRIPTION OF REFERENCE SIGNS

1: Positive electrode layer
2: Negative electrode layer
3: Isolation layer
4: Positive substrate
5: Positive active material layer
6: Negative active material layer
7: Negative substrate
10: Energy storage device (all-solid-state battery)
20: Energy storage unit
30: Energy storage apparatus

**Claims**

1. A sulfide solid electrolyte comprising a crystal structure, and

   comprising, as constituent elements, one, or two or more divalent elements A, one, or two or more halogen elements X, and a nitrogen element,
   wherein the divalent element A and the halogen element X make a combination such that a compound $A_{0.5}X$ including the divalent element A and the halogen element X is higher in hydration energy than LiI.

2. The sulfide solid electrolyte according to claim 1, wherein the divalent element A and the halogen element X make a combination such that the compound $A_{0.5}X$ including the divalent element A and the halogen element X has hydration energy of -4 meV/atom or more.

3. The sulfide solid electrolyte according to claim 2, wherein the divalent element A and the halogen element X make a combination such that the compound $A_{0.5}X$ including the divalent element A and the halogen element X has hydration energy of 0 meV/atom or more.

4. The sulfide solid electrolyte according to claim 3, wherein the divalent element A and the halogen element X make a combination such that the compound $A_{0.5}X$ including the divalent element A and the halogen element X has hydration energy of 2 meV/atom or more.

5. The sulfide solid electrolyte according to claim 4, wherein the divalent element A and the halogen element X make a combination such that the compound $A_{0.5}X$ including the divalent element A and the halogen element X has hydration energy of 4 meV/atom or more.

6. The sulfide solid electrolyte according to any one of claims 1 to 5, wherein the divalent element A and the halogen element X make a combination such that the compound $A_{0.5}X$ including the divalent element A and the halogen element X has hydration energy of 200 meV/atom or less.

7. The sulfide solid electrolyte according to any one of claims 1 to 6, wherein the sulfide solid electrolyte satisfies any of the following a to c:

   a: the divalent element A is one, or two or more elements selected from the group consisting of calcium, strontium, barium, manganese, and zinc, and the halogen element X is one, or two or more elements selected from the group consisting of fluorine, chlorine, bromine, and iodine;
   b: the divalent element A is magnesium, and the halogen element X is fluorine; and
   c: the divalent element A is copper, and the halogen element X is one, or two or more elements selected from the group consisting of chlorine, bromine, and iodine.

8. The sulfide solid electrolyte according to claim 7, wherein the sulfide solid electrolyte satisfies either the following al or a2:

   a1: the divalent element A is one, or two or more elements selected from the group consisting of calcium, barium, manganese, and zinc, and the halogen element X is one, or two or more elements selected from the group consisting of fluorine, chlorine, bromine, and iodine; and
   a2: the divalent element A is strontium, and the halogen element X is one, or two or more elements selected from the group consisting of fluorine, chlorine, and bromine.

9. The sulfide solid electrolyte according to any one of claims 1 to 8, wherein the halogen element X includes iodine.

10. The sulfide solid electrolyte according to any one of claims 1 to 9, wherein the divalent element A is zinc.

11. The sulfide solid electrolyte according to any one of claims 1 to 10, further comprising a phosphorus element as a constituent element, wherein a molar ratio of a content of the divalent element A to a content of the phosphorus element is 0.01 or more and 0.4 or less.

12. The sulfide solid electrolyte according to any one of claims 1 to 11, further comprising a phosphorus element and a lithium element as constituent elements, wherein a molar ratio of a content of the lithium element to a content of the phosphorus element is 1 or more and 5 or less.

13. The sulfide solid electrolyte according to any one of claims 1 to 12, further comprising a phosphorus element and a sulfur element as constituent elements, wherein a molar ratio of a content of the sulfur element to a content of the phosphorus element is 2 or more and 6 or less.

14. The sulfide solid electrolyte according to any one of claims 1 to 13, further comprising a phosphorus element as a constituent element, wherein a molar ratio of a content of the halogen element X to a content of the phosphorus element is 0.1 or more and 2 or less.

15. The sulfide solid electrolyte according to any one of claims 1 to 14, having an ionic conductivity of 1 mS/cm or more at 25°C.

16. The sulfide solid electrolyte according to any one of claims 1 to 15, having diffraction peaks in a range of 19.9° ± 0.5° and a range of 29.3° ± 0.5° in an X-ray diffraction diagram with a CuKa ray used.

17. The sulfide solid electrolyte according to claim 16, wherein the diffraction peak in the range of 19.9° ± 0.5° is, in an X-ray diffraction diagram with a CuKa ray used, a diffraction peak with the highest diffraction intensity, a diffraction peak with the second highest diffraction intensity, a diffraction peak with the third highest diffraction intensity, or a diffraction peak with the fourth highest diffraction intensity.

18. The sulfide solid electrolyte according to any one of claims 1 to 17, further comprising an element M as a constituent element, wherein the element M is an element other than the divalent element A, and is at least one selected from the group consisting of aluminum, tantalum, silicon, scandium, magnesium, niobium, boron, hafnium, carbon, zirconium, and titanium.

19. The sulfide solid electrolyte according to any one of claims 1 to 18, represented by the following formula 1:
[Chemical Formula 1]

$$(100-u-v-v')\{(1-z)[xLi_2S \cdot yP_2S_5] \cdot 2Li_\alpha M_\beta N\} \cdot uA_{0.5}X \cdot vLiI \cdot v'LiX' \cdot wY \cdots \qquad I$$

wherein A is the divalent element A, X is the halogen element X, X' is a halogen element other than I, M is an element other than the divalent element A, and is at least one element selected from the group consisting of Al, Ta, Si, Sc, Mg, Nb, B, Hf, C, Zr, and Ti, $\alpha$ and $\beta$ are numbers that give a stoichiometric ratio depending on the type of the element M, Y is one, or two or more elements other than Li, S, P, N, I, A, M, X, and X', x is a number of 0.5 or more and 0.8 or less, y is a number of 0.2 or more and 0.5 or less, z is a number of more than 0 and 0.5 or less, u is a number of more than 0 and 30 or less, v is a number of 0 or more and 30 or less, v' is a number of 0 or more and 30 or less, and w is a number of 0 or more and 20 or less.

20. The sulfide solid electrolyte according to any one of claims 1 to 19, further comprising, as constituent elements, one, or two or more divalent elements B other than the divalent element A, wherein a molar ratio of a content of the divalent element B to a total content of the divalent element A and the divalent element B is less than 0.5.

21. The sulfide solid electrolyte according to any one of claims 1 to 19, comprising, as a constituent element, substantially no divalent element B other than the divalent element A.

22. A method for producing a sulfide solid electrolyte, comprising treating a composition material including, as constituent elements, one, or two or more divalent elements A, one, or two or more halogen elements X, and a nitrogen element, wherein the divalent element A and the halogen element X make a combination such that a compound $A_{0.5}X$ including the divalent element A and the halogen element X is higher in hydration energy than LiI.

23. An energy storage device comprising the sulfide solid electrolyte according to any one of claims 1 to 21.

24. An electronic device comprising the energy storage device according to claim 23.

25. An automobile comprising the energy storage device according to claim 23.

Fig. 1

Fig. 2

Fig. 3

Fig. 4

<table>
<tr><td colspan="2">**INTERNATIONAL SEARCH REPORT**</td><td colspan="2">International application No.<br>**PCT/JP2022/018190**</td></tr>
</table>

**A. CLASSIFICATION OF SUBJECT MATTER**

*H01B 1/10*(2006.01)i; *C01B 21/00*(2006.01)i; *C01B 25/14*(2006.01)i; *H01B 1/06*(2006.01)i; *H01B 13/00*(2006.01)i; *H01M 10/052*(2010.01)i; *H01M 10/0562*(2010.01)i

FI: H01B1/10; H01B1/06 A; H01B13/00 Z; H01M10/052; H01M10/0562; C01B21/00; C01B25/14

According to International Patent Classification (IPC) or to both national classification and IPC

**B. FIELDS SEARCHED**

Minimum documentation searched (classification system followed by classification symbols)

H01B1/10; C01B21/00; C01B25/14; H01B1/06; H01B13/00; H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/045633 A1 (GS YUASA INTERNATIONAL LTD.) 05 March 2020 (2020-03-05)<br>paragraphs [0012]-[0146] | 1-25 |
| A | WO 2020/184464 A1 (NATIONAL UNIVERSITY CORPORATION TOYOHASHI UNIVERSITY OF TECHNOLOGY) 17 September 2020 (2020-09-17)<br>paragraphs [0009]-[0084] | 1-25 |
| A | WO 2020/049803 A1 (PANASONIC INTELLECTUAL PROPERTY MANAGEMENT CO., LTD.) 12 March 2020 (2020-03-12)<br>paragraphs [0010]-[0766] | 1-25 |
| A | WO 2020/044652 A1 (PANASONIC INTELLECTUAL PROPERTY MANAGEMENT CO., LTD.) 05 March 2020 (2020-03-05)<br>paragraphs [0009]-[0346] | 1-25 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **08 July 2022** | **19 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/018190**

| Patent document cited in search report | | | Publication date (day/month/year) | Patent family member(s) | | | Publication date (day/month/year) |
|---|---|---|---|---|---|---|---|
| WO | 2020/045633 | A1 | 05 March 2020 | WO | 2020/045634 | A1 | |
| | | | | US | 2021/0194050 | A1 | |
| | | | | paragraphs [0075]-[0350] | | | |
| | | | | US | 2021/0218056 | A1 | |
| | | | | EP | 3828979 | A1 | |
| | | | | EP | 3828980 | A1 | |
| | | | | CN | 112673506 | A | |
| | | | | CN | 112740458 | A | |
| WO | 2020/184464 | A1 | 17 September 2020 | CN | 113544088 | A | |
| WO | 2020/049803 | A1 | 12 March 2020 | US | 2021/0151740 | A1 | |
| | | | | paragraphs [0012]-[0827] | | | |
| | | | | CN | 112074977 | A | |
| WO | 2020/044652 | A1 | 05 March 2020 | US | 2021/0143424 | A1 | |
| | | | | paragraphs [0012]-[0377] | | | |
| | | | | EP | 3846261 | A1 | |
| | | | | CN | 111971825 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013016423 A